# EUROPEAN PATENT SPECIFICATION

(11) **EP 3 770 318 B1**
(45) Date of publication and mention of the grant of the patent: **30.10.2024**
(21) Application number: 19188085.5
(22) Date of filing: 24.07.2019
(51) Int. Cl.: D06P 5/13, C08J 7/06

(54) **METHOD FOR REVERSIBLE AND SELECTIVE DYEING OF A SYNTHETIC POLAR-POLYMER MATERIAL**
VERFAHREN ZUM REVERSIBLEN UND SELEKTIVEN FÄRBEN VON EINEM SYNTHETISCHEN POLAR-POLYMER-MATERIAL
PROCÉDÉ DETEINTURE RÉVERSIBLE ET SÉLECTIVE D'UN MATÉRIAU POLYMÈRE POLAIRE SYNTHÉTIQUE

(43) Date of publication of application: 27.01.2021
(73) Proprietor: Smart Coloring GmbH, 52074 Aachen (DE)
(72) Inventor: VOS, Hendre, 52074 Aachen (DE); ROBERTZ, Bernd, 52074 Aachen (DE)
(74) Representative: Michalski Hüttermann & Partner Patentanwälte mbB

(56) References cited:
- CN-A- 104 841 389
- US-A- 3 663 262
- US-A1- 2014 127 477
- US-A1- 2016 102 430
- VESNA V. PANIC ET AL.: "Adsorption of azo dyes on polymer materials", HEM. IND., vol. 67, no. 6, 2013, pages 881 - 900, XP002795055
- YADAGIRI RACHURI ET AL.: "Selective and reversible adsorption of cationic dyes by mixed ligand Zn(II) coordination polymers synthesized by reactant ration modulation", DALTON TRANSACTIONS, vol. 47, 6 December 2017 (2017-12-06), pages 898 - 908, XP002795056

## Description

The present invention relates to a method for reversible and selective coloring of synthetic polar-polymer material, to a colored synthetic polar-polymer material, and to an article comprising at least one colored synthetic polar-polymer material.

### BACKGROUND OF THE INVENTION

In the polymer industry it is frequently necessary for an article manufactured from polymers to have a range of properties. Amongst others, a specific color of the article may be desired.

The optical properties of products are increasingly coming to the fore. The coloring of plastics is of central importance for the appearance of plastic products and their change in the course of their life.

The coloring of plastics to colored polymer components is usually achieved by using color master batches, colored micro granules, so-called dry liquid colors or liquid colors. Colored polymer components can for example be produced from color master batch concentrates blended into a polymer prior to molding or extruding or pre-colored polymers via melt blending/ compounding. The selection of one coloring method over the other may vary based on economics, secondary operations and specific requirements of the end application.

When coloring with a master batch, in an upstream step, the pigment or dye is first dispersed or dissolved in a polymeric carrier with the addition of dispersants and if necessary or required further additives. In order to achieve a fine and homogeneous distribution of the pigments or dyes, twin-screw extruders are often used to produce the master batches. Separate master batches are required for each different color and - depending on the carrier selected and the final application - for the different plastics that are to be colored with the master batch. This leads to an inefficient process, especially with small batch sizes and frequent color changes.

The most common method used by plastics processors is the use of concentrated pigments dispersed into a polymer carrier resin by molding process. During molding the master batch is let down into natural resin as it is feed into the extruder at a predefined ratio to achieve the desired color.

The processing of the master batches also has major disadvantages for the plastics processor. On the one hand this is connected with a complex storage of different color master batches, on the other hand frequent color changes on the extrusion or injection molding machine lead to an inefficient process due to material losses, cleaning processes and downtimes.

The selection of the color pigment depends, among other things, on the desired color, the polymer carrier to be used, the application and the associated requirements, but also on the further processing conditions at the plastics processor- e.g. conventional injection molding or hot runner technology. Hot runner technology is characterized by the fact that the gate system is heated separately from the rest of the mold in order to maintain the flowability of the plastic melt at a constant level. The melt and thus also the colorants are exposed to a higher thermal load which further restricts the choice of pigments.

Due to the different temperature loads, the available selection of color pigments is reduced as the temperature rises. In the case of polyolefins (polyethylene PE/ polypropylene PP) this number amounts to approx. 70 different colorants, in the case of polyamide (PA) only up to 50 colorants can be used and in the case of polyphenylene sulfide (PPS) only less than 10 colorants are available which meet the processing conditions.

There are various method of coloring co-polyester, co-polycarbonates, acrylonitrile-butadiene-styrene, polyamide, polyurethane, polyalkyl(meth)acrylate and copolymers thereof.

All these methods do not work efficient for the colorization of polar polymer materials comprising a substantial content of non-polar polymers, such as polyalkylenes, polyethylene (PE), polypropylene (PP), polybutylene (PB), polystyrene or mixtures thereof.

Further, there is a need to speed up the colorization time for coloring polar polymer materials comprising co-polyester, co-polycarbonates, acrylonitrile-butadiene-styrene, polyamide, polyurethane, polyalkyl(meth)acrylate, allyldiglycol carbonate, styrene copolymers or mixtures thereof, or in addition non-polar polymers, such as polyalkylenes, polyethylene (PE), polypropylene (PP), polybutylene (PB) or mixtures thereof.

The plastic parts, foils, etc. produced in this way can only be recycled at great expense after application (end-of-life). Especially for colored polymer articles recycling may be connected to separating the articles according to their color, in order to achieve high quality recycled material. These decolorization processes may be oxidation or reduction process, wherein the used dyes are decolorized by chemical modifying the dye such as destroying the conjugated double-bond system. This has the drawback that the destroyed dye compounds remain in the polymer material and the used oxidation or reduction agents are very aggressive and used in high amounts, which is not environmentally friendly.

Since the current processes are expensive and complex and so far lead to unsatisfactory results, many plastics cannot be reused in the same way and "down cycling" takes place. The unsorted plastics are melted together and processed to dark, mostly brown or black colored regranulates. New plastic products can only be produced to a very limited extent from this type of dyed recycling material. The regranulates are therefore often only processed into inferior products such as garbage bags, pallets, et cetera.

Recyclers may counter this with the addition of other colorants such as titanium dioxide. However, this impairs the physical properties and processability of the plastics, which further restricts their range of application. In particular, further recycling is made much more difficult because additional colorants are added with each cycle, further impairing the physical properties of the polymer.

US3663262 discloses a method for repeatedly tinting and changing colors.

Accordingly, there is a need for a method for reversible and selective coloring synthetic polar-polymer material, especially polar-polymer material containing a substantially content of non-polar polymers, that can be decolored by removing the dyes from the colored polymer material.

### SUMMARY OF THE INVENTION

It is an object of the invention to provide a method for reversible and selective coloring synthetic polar-polymer material, a colored synthetic polar-polymer material and an article comprising at least one colored synthetic polar-polymer material.

The object is solved by the features of the independent claim. Preferred embodiments are described by the features of the dependent claims.

Thus, the object is solved by a method for reversible and selective coloring a synthetic polar-polymer material comprising the steps:
exposing the outer surface of the synthetic polar-polymer material to an aqueous dispersed coloring solution, wherein
the aqueous dispersed coloring solution comprises:
   - at least one organic aromatic coloring agent having a molecular weight Mw in
the range of ≥ 250 g/mol toabout ≤ 550 g/mol and wherein the organic aromatic coloring agent is not a chemical reactive dye, and wherein the coloring agent comprises at least 2 to 6 aromatic six-membered rings and comprises at least one heteroatom selected from N, O, S, halogens,
   - at least one dispersing agent for dispersing the organic aromatic coloring agent in the aqueous solution, and
   - optionally at least one solubilizer,
wherein the aqueous dispersed coloring solution exposing the synthetic polymer material has a temperature in the range of ≥ 30 °C to ≤ 150 °C, and optionally a pH in the range of ≥ 2.5 and < 7and wherein the dispersing agent is selected different from the solubilizer.

The basic idea of method for reversible and selective coloring synthetic polar-polymer material is to use at least one organic aromatic coloring agent having a molecular weight Mw in the range of ≥ 250 g/mol to ≤ 550 g/mol.

Without being bond to a specific theory the inventors assume that the organic aromatic coloring agent may have the ability to migrate into the synthetic polar-polymer material and therefore coloring the synthetic polar-polymer material. A migration of the organic aromatic coloring agent into the synthetic polar-polymer material may also allow a migration of the organic aromatic coloring agent out of the colored synthetic polar-polymer material. Therefore a decoloring of the colored material may be possible. In order to enable a migration as unhindered as possible, the organic aromatic coloring agent preferably has a rather planar structure and preferably comprises at least one free rotation center outside the planar structure. Further in case of ligands and/or remnants which may be spatially or sterically demanding, the ligands and/or remnants may be as freely movable as possible around a center of rotation. This may give the organic aromatic coloring agent the ability to adapt its shape to the environment given by the matrix of the synthetic polar-polymer material. Preferably the organic aromatic coloring agent may not comprise a spiro-center and/or the organic aromatic coloring agent may not comprise a large moiety that is rotation-impaired. In this context a large moiety that is rotation impaired may mean that the molecular weight of this rotation impaired moiety is about 350 g/mol +/- 10%.

Furthermore, the aqueous dispersed coloring solution comprises at least one dispersing agent for dispersing the organic aromatic coloring agent in the aqueous solution. The organic aromatic coloring agent may only be partially soluble in the aqueous solution. The dispersing agent may enhance the stability of the aqueous dispersed coloring solution by distributing the organic aromatic coloring agent in the phase of the aqueous solution.

In addition, the aqueous dispersed coloring solution optionally may comprise at least one solubilizer. The solubilizer may enhance the solubility of the organic aromatic coloring agent in the aqueous solution. The amount of molecularly solved organic aromatic coloring agent may be enhanced by the solubilizer. Therefore, the solubilizer may improve the result of the coloring process.

During the coloring process the outer surface of the synthetic polar-polymer material is exposed to the aqueous dispersed coloring solution, wherein the aqueous dispersed coloring solution has a temperature in the range of about ≥ 30 °C to about ≤ 150 °C. As a result of this process the synthetic polar-polymer material is colored.

At temperatures below 100 °C of the aqueous dispersed coloring solution the colorization process may be carried out in an open reactor without pressure. At temperatures about ≥ 90 °C, preferably about ≥ 100 °C, of the aqueous dispersed coloring solution the colorization process may be carried out in a closed reactor under pressure.

According to a further preferred embodiment the method for reversible and selective coloring a synthetic polar-polymer material comprises the steps:
exposing the outer surface of the synthetic polar-polymer material to an aqueous dispersed coloring solution, wherein
the aqueous dispersed coloring solution comprises:
   - at least one organic aromatic coloring agent having a molecular weight Mw in the range of about ≥ 250 g/mol to about ≤ 550 g/mol,
   - at least one dispersing agent for dispersing the organic aromatic coloring agent in the aqueous solution, and
   - optionally at least one solubilizer,
   - at least one acid, preferably a C₂ to C₈ organic acid, more preferred acetic acid;
wherein the aqueous dispersed coloring solution exposing the synthetic polymer material has a pH in the range of about ≥ 2.5 and < 7, preferably a pH in the range of about ≥ 3.4 and about ≤ 6, and has a temperature in the range of about ≥ 30 °C to about ≤ 150 °C, preferably has a temperature in the range of about ≥ 60 °C to about ≤ 100 °C and wherein the dispersing agent is selected different from the solubilizer.

According to a further preferred embodiment the method for reversible and selective coloring a synthetic polar-polymer material comprises the steps:
exposing the outer surface of the synthetic polar-polymer material to an aqueous dispersed coloring solution, wherein the synthetic polar-polymer material contains:
   a) at least one non-polar-polymer having a Mw about ≥ 1000 g/mol, and
   b) a polar component of:
      - at least one synthetic polar-polymer having a Mw about ≥ 1000 g/mol, and/or
      - at least one synthetic polar-oligomer having a Mw about ≥ 600 g/mol and < 1000 g/mol, and/or
      - at least one polar-additive having a Mw about ≥ 70 and < 600 g/mol, wherein the polar-additive is selected different to the organic aromatic coloring agent having a molecular weight Mw in the range of about ≥ 250 g/mol to about ≤ 550 g/mol, and
wherein the aqueous dispersed coloring solution comprises:
   - at least one organic aromatic coloring agent having a molecular weight Mw in the range of about ≥ 250 g/mol to about ≤ 550 g/mol,
   - at least one dispersing agent for dispersing the organic aromatic coloring agent in the aqueous solution, and
   - optionally at least one solubilizer,
wherein the aqueous dispersed coloring solution exposing the synthetic polymer material has a temperature in the range of about ≥ 30 °C to about ≤ 150 °C, preferably a temperature in the range of about ≥ 60 °C to about ≤ 100 °C and optionally a pH in the range of about ≥ 2.5 and < 7, preferably a pH in the range of about ≥ 3.4 and about ≤ 6, and wherein the dispersing agent is selected different from the solubilizer.

The polar additive may be solid at 23 °C. The polar additive may be not a dye. The polar additive may be solid at 23 °C and is not a dye. The polar additive may be solid at 23 °C and is not a dye, is selected different from the dispersing agent and is selected different from the solubilizer.

The aqueous dispersed coloring solution may not comprise a glycol ether, glycol and/or butanediol.

According to a further preferred embodiment the method for reversible and selective coloring a synthetic polar-polymer material, wherein the synthetic polar-polymer material contains ≥ 0 wt.-% to about ≤ 99.5 wt.-% of a synthetic non-polar-polymer, based on the total weight of the synthetic polar-polymer material, the method may comprise the steps:
exposing the outer surface of the synthetic polar-polymer material to an aqueous dispersed coloring solution, wherein
the aqueous dispersed coloring solution comprises:
   - at least one organic aromatic coloring agent having a molecular weight Mw in the range of about ≥ 250 g/mol to about ≤ 550 g/mol,
   - at least one dispersing agent for dispersing the organic aromatic coloring agent in the aqueous solution, and
   - optionally at least one solubilizer,
wherein the aqueous dispersed coloring solution exposing the synthetic polymer material has a temperature in the range of about ≥ 30 °C to about ≤ 150 °C, preferably a temperature in the range of about ≥ 60 °C to about ≤ 100 °C, and optionally a pH in the range of about ≥ 2.5 and < 7, preferably a pH in the range of about ≥ 3.4 and about ≤ 6 and wherein the dispersing agent is selected different from the solubilizer.

According to a further preferred embodiment the method for reversible and selective coloring a synthetic polar-polymer material, wherein the synthetic polar-polymer material contains about ≥ 1 wt.-% to 99.5 wt.-% of a synthetic non-polar-polymer, based on the total weight of the synthetic polar-polymer material, comprises the steps:
exposing the outer surface of the synthetic polar-polymer material to an aqueous dispersed coloring solution, wherein
the aqueous dispersed coloring solution comprises:
   - at least one organic aromatic coloring agent having a molecular weight Mw in the range of about ≥ 250 g/mol to about ≤ 550 g/mol,
   - at least one dispersing agent for dispersing the organic aromatic coloring agent in the aqueous solution, and
   - optionally at least one solubilizer,
   - at least one acid, preferably a C₂ to C₈ organic acid, more preferred acetic acid;
wherein the aqueous dispersed coloring solution exposing the synthetic polymer material has a pH in the range of about ≥ 2.5 and < 7, preferably a pH in the range of about ≥ 3.4 and about ≤ 6, and a temperature in the range of about ≥ 30 °C to about ≤ 150 °C, preferably a temperature in the range of about ≥ 60 °C to about ≤ 100 °C and wherein the dispersing agent is selected different from the solubilizer.

According to another further preferred embodiment the method for reversible and selective coloring a synthetic polar-polymer material, wherein the synthetic polar-polymer material contains ≥ 5 wt.-% to about ≤ 99.5 wt.-% of a synthetic non-polar-polymer, preferably ≥ 10 wt.-% to about ≤ 99.5 wt.-% of a synthetic non-polar-polymer, more preferably ≥ 15 wt.-% to about ≤ 99.5 wt.-% of a synthetic non-polar-polymer, further preferably about ≥ 90 wt.-% to about ≤ 99.5 wt.-% of a synthetic non-polar-polymer based on the total weight of the synthetic polar-polymer material, the method may comprise the steps:
exposing the outer surface of the synthetic polar-polymer material to an aqueous dispersed coloring solution, wherein
the aqueous dispersed coloring solution comprises:
   - at least one organic aromatic coloring agent having a molecular weight Mw in the range of about ≥ 250 g/mol to about ≤ 550 g/mol,
   - at least one dispersing agent for dispersing the organic aromatic coloring agent in the aqueous solution, and
   - optionally at least one solubilizer,
wherein the aqueous dispersed coloring solution exposing the synthetic polymer material has a temperature in the range of about ≥ 30 °C to about ≤ 150 °C, preferably a temperature in the range of about ≥ 60 °C to about ≤ 100 °C, and optionally a pH in the range of about ≥ 2.5 and < 7, preferably a pH in the range of about ≥ 3.4 and about ≤ 6 and wherein the dispersing agent is selected different from the solubilizer.

According to a further preferred embodiment the synthetic polar-polymer material that is colored comprises at least one synthetic polar-component, wherein the synthetic polar-component comprises:
a) at least one synthetic polar-polymer having a Mw about ≥ 1000 g/mol; or
b) at least one composition of a non-polar-polymer having a Mw about ≥ 1000 g/mol containing in addition:
   - at least one synthetic polar-polymer having a Mw about ≥ 1000 g/mol, and/or
   - at least one synthetic polar-oligomer having a Mw about ≥ 600 g/mol and < 1000 g/mol, and/or
   - at least one polar-additive having a Mw about ≥ 70 and < 600 g/mol, wherein the polar-additive is selected different to the organic aromatic coloring agent having a molecular weight Mw in the range of about ≥ 250 g/mol to about ≤ 550 g/mol.

According to a further preferred embodiment the synthetic polar-polymer material that is colored comprises:
a) about ≥ 0.5 wt.-% to about ≤ 100 wt.-% of at least one synthetic polar-polymer having a Mw about ≥ 1000 g/mol; or
b) a composition of about ≥ 0 wt.-% to about ≤ 99.5 wt.-% of at least one non-polar-polymer having a Mw about ≥ 1000 g/mol containing in addition:
   - about ≥ 0.5 wt.-% to about ≤ 100 wt.-% of at least one synthetic polar-polymer having a Mw about ≥ 1000 g/mol, and/or
   - about ≥ 0.5 wt.-% to about ≤ 100 wt.-% of at least one synthetic polar-oligomer having a Mw about ≥ 600 g/mol and < 1000 g/mol, and/or
   - about ≥ 0.5 wt.-% to about ≤ 100 wt.-% of at least one polar-additive having a Mw about ≥ 70 and < 600 g/mol, wherein the weight % of the non-polar-polymer, the synthetic polar-polymer, the synthetic polar-oligomer, the polar-additive are based on the total weight amount of said composition, and wherein the weight amounts are selected such that it doesn't exceed 100 wt.-%; and
the polar-additive is selected different to the organic aromatic coloring agent having a molecular weight Mw in the range of about ≥ 250 g/mol to about ≤ 550 g/mol.

According to a further preferred embodiment the method for reversible and selective coloring a synthetic polar-polymer material comprises the steps:
exposing the outer surface of the synthetic polar-polymer material to an aqueous dispersed coloring solution,
wherein the synthetic polar-polymer material that is colored comprises at least one synthetic polar-component, wherein the synthetic polar-component comprises:
   a) at least one synthetic polar-polymer having a Mw about ≥ 1000 g/mol; and/or
   b) at least one composition of a non-polar-polymer having a Mw about ≥ 1000 g/mol containing in addition:
      - at least one synthetic polar-polymer having a Mw about ≥ 1000 g/mol, and/or
      - at least one synthetic polar-oligomer having a Mw about ≥ 600 g/mol and < 1000 g/mol, and/or
      - at least one polar-additive having a Mw about ≥ 70 and < 600 g/mol, wherein the polar-additive is selected different to the organic aromatic coloring agent having a molecular weight Mw in the range of about ≥ 250 g/mol to about ≤ 550 g/mol, and
wherein the aqueous dispersed coloring solution comprises:
   - at least one organic aromatic coloring agent having a molecular weight Mw in the range of about ≥ 250 g/mol to about ≤ 550 g/mol,
   - at least one dispersing agent for dispersing the organic aromatic coloring agent in the aqueous solution, and
   - optionally at least one solubilizer,
   - at least one acid, preferably a C₂ to Cs organic acid, more preferred acetic acid;
wherein the aqueous dispersed coloring solution exposing the synthetic polymer material has a pH in the range of about ≥ 2.5 and < 7, preferably a pH in the range of about ≥ 3.4 and about ≤ 6, and a temperature in the range of about ≥ 30 °C to about ≤ 150 °C, preferably a temperature in the range of about ≥ 60 °C to about ≤ 100 °C and wherein the dispersing agent is selected different from the solubilizer.

According to a further preferred embodiment the method for reversible and selective coloring a synthetic polar-polymer material, wherein the synthetic polar-polymer material contains about ≥ 1 wt.-% to about ≤ 99.5 wt.-% of a synthetic non-polar-polymer, based on the total weight of the synthetic polar-polymer material, comprises the steps:
exposing the outer surface of the synthetic polar-polymer material to an aqueous dispersed coloring solution,
wherein the synthetic polar-polymer material that is colored comprises at least one synthetic polar-component, wherein the synthetic polar-component comprises:
   a) at least one synthetic polar-polymer having a Mw about ≥ 1000 g/mol; or
   b) at least one composition of a non-polar-polymer having a Mw about ≥ 1000 g/mol containing in addition:
      - at least one synthetic polar-polymer having a Mw about ≥ 1000 g/mol, and/or
      - at least one synthetic polar-oligomer having a Mw about ≥ 600 g/mol and < 1000 g/mol, and/or
      - at least one polar-additive having a Mw about ≥ 70 and < 600 g/mol, wherein the polar-additive is selected different to the organic aromatic coloring agent having a molecular weight Mw in the range of about ≥ 250 g/mol to about ≤ 550 g/mol, and
wherein the aqueous dispersed coloring solution comprises:
   - at least one organic aromatic coloring agent having a molecular weight Mw in the range of about ≥ 250 g/mol to about ≤ 550 g/mol,
   - at least one dispersing agent for dispersing the organic aromatic coloring agent in the aqueous solution, and
   - optionally at least one solubilizer,
wherein the aqueous dispersed coloring solution exposing the synthetic polymer material has a temperature in the range of about ≥ 30 °C to about ≤ 150 °C, preferably a temperature in the range of about ≥ 60 °C to about ≤ 100 °C and optionally a pH in the range of about ≥ 2.5 and < 7, preferably a pH in the range of about ≥ 3.4 and about ≤ 6, and wherein the dispersing agent is selected different from the solubilizer.

According to a further preferred embodiment the method for reversible and selective coloring a synthetic polar-polymer material comprises the steps:
exposing the outer surface of the synthetic polar-polymer material to an aqueous dispersed coloring solution,
wherein the synthetic polar-polymer material contains:
   a) at least one non-polar-polymer having a Mw about ≥ 1000 g/mol, and
   b) a polar component of:
      - at least one synthetic polar-polymer having a Mw about ≥ 1000 g/mol, and/or
      - at least one synthetic polar-oligomer having a Mw about ≥ 600 g/mol and < 1000 g/mol, and/or
      - at least one polar-additive having a Mw about ≥ 70 and < 600 g/mol, wherein the polar-additive is selected different to the organic aromatic coloring agent having a molecular weight Mw in the range of about ≥ 250 g/mol to about ≤ 550 g/mol, and
wherein the aqueous dispersed coloring solution comprises:
   - at least one organic aromatic coloring agent having a molecular weight Mw in the range of about ≥ 250 g/mol to about ≤ 550 g/mol,
   - at least one dispersing agent for dispersing the organic aromatic coloring agent in the aqueous solution, and
   - optionally at least one solubilizer,
   - at least one acid, preferably a C₂ to C₈ organic acid, more preferred acetic acid;
wherein the aqueous dispersed coloring solution exposing the synthetic polymer material has a pH in the range of about ≥ 2.5 and < 7, preferably a pH in the range of about ≥ 3.4 and about ≤ 6, and a temperature in the range of about ≥ 30 °C to about ≤ 150 °C, preferably a temperature in the range of about ≥ 60 °C to about ≤ 100 °C and wherein the dispersing agent is selected different from the solubilizer.

The synthetic polar-polymer material may comprise a mixture of different components. The synthetic polar-polymer material may comprise at least one synthetic polar-component. Polar in this context may mean that the component shows an enhanced polarity compared to a component that exclusively consist of C-atoms and H-atoms.

According to another preferred embodiment the synthetic polar-polymer having a Mw about ≥ 1000 g/mol, the synthetic polar-oligomer having a Mw about ≥ 600 g/mol and < 1000 g/mol, and the polar-additive having a Mw about ≥ 70 and < 600 g/mol may each comprise at least about ≥ 5 wt.-% of heteroatoms, wherein the weight % is calculated based on the individual weights of the synthetic polar-polymer, the synthetic polar-oligomer, and the polar-additive, respectively. In this context a heteroatom may be any atom excluding C-atoms and H-atoms. Preferably, the heteroatom may be selected from the group comprising: N, O, F, Cl, Br, I, S, and P. Furthermore, preferably the synthetic polar-polymer having a Mw about ≥ 1000 g/mol, the synthetic polar-oligomer having a Mw about ≥ 600 g/mol and < 1000 g/mol, and the polar-additive having a Mw about ≥ 70 and < 600 g/mol may each comprise at least about ≥ 5 wt.-% and preferably < 70 wt.-% of O-atoms.

The polarity of the synthetic polar-polymer material may enhance the ability of the organic aromatic coloring agent to migrate into the synthetic polar-polymer material. According to this in an another embodiment the synthetic polar-polymer material that is colored may comprise at least about ≥ 0.5 wt.-% of the synthetic polar-component, preferably about ≥ 5 wt.-% of the synthetic polar-component, and further preferred about ≥ 10 wt.-% of the synthetic polar-component, in addition preferred about ≥ 15 wt.-% of the synthetic polar-component, also preferred about ≥ 20 wt.-% of the synthetic polar-component, or about ≥ 30 wt.-% and about ≤ 100 wt.-% of the synthetic polar-component, wherein the weight % is calculated based on the total weight of the synthetic polar-polymer material.

According to another embodiment the synthetic polar-polymer material that is colored may comprise at least about ≥ 0.5 wt.-% to about ≤ 99.5 wt.-% of a synthetic non-polar polymer, preferably about ≥ 5 wt.-% of the synthetic non-polar polymer, and further preferred about ≥ 10 wt.-% of the synthetic non-polar polymer, in addition preferred about ≥ 15 wt.-% of the synthetic non-polar polymer, also preferred about ≥ 20 wt.-% of the synthetic non-polar polymer, or about ≥ 30 wt.-% to about ≤ 90 wt.-%, or about ≥ 35 wt.-% to about ≤ 85 wt.-%, or about ≥ 40 wt.-% to about ≤ 80 wt.-%, or about ≥ 45 wt.-% to about ≤ 75 wt.-%, or about ≥ 50 wt.-% to about ≤ 75 wt.-%, or about ≥ 55 wt.-% to about ≤ 70 wt.-%, or about ≥ 60 wt.-% to about ≤ 65 wt.-%, wherein the weight % is calculated based on the total weight of the synthetic polar-polymer material.

The migration capability of the organic aromatic coloring agent into the synthetic polar-polymer material may also be influenced by the morphology of the synthetic polar-polymer and/or the synthetic polar-oligomer. It may be possible that the synthetic polar-polymer and/or the synthetic polar-oligomer may show a mixed morphology having a mixture of crystalline phases, semi-crystalline phases and amorphous phases.

According to another embodiment:
a) the synthetic polar-polymer may comprise an amorphous phase of at least about ≥ 10 vol.-%, preferably about ≥ 30 vol.-%, more preferably about ≥ 50 vol.-% and about ≤ 100 vol.-%, wherein the volume % is calculated on the total volume of the synthetic polar-polymer; and/or
b) the synthetic polar-oligomer may comprise an amorphous phase of at least about ≥ 10 vol.-%, preferably about ≥ 30 vol.-%, more preferably about ≥ 50 vol.-% and about ≤ 100 vol.-%, wherein the volume % is calculated on the total volume of the synthetic polar-oligomer.

The volume % of the amorphous phase of the synthetic polar-polymer and/or the synthetic polar-oligomer may be determined by light microscopy, light scattering, X-ray diffraction, electron microscopy, electron diffraction, and/or neutron scattering, wherein light microscopy is preferred.

The migration capability of the organic aromatic coloring agent into the synthetic polar-polymer material may also be influenced by a free volume of the synthetic polar-polymer and/or the synthetic polar-oligomer. It may be advantage to the result of the coloring process when the synthetic polar-polymer and/or the synthetic polar-oligomer trap a large amount of interconnected free volume in the glassy state.

According to another embodiment
a) the synthetic polar-polymer may have, above the glass-transition temperature T_{g}, a free volume, in the range of about ≥ 1 vol.-% to 25 %, preferably about ≥ 2 % to about ≤ 20 %, further preferred about ≥ 2.2 % to about ≤ 15 %, based on the total volume of the synthetic polar-polymer material; and/or
b) the synthetic polar-oligomer may have, above the glass-transition temperature T_{g}, a free volume in the range of about ≥ 1 % to 25 %, preferably about ≥ 2 % to about ≤ 20 %, further preferred about ≥ 2.2 % to about ≤ 15 %, based on the total volume of the synthetic polar-oligomer material.

The free volume may be determined by positron annihilation spectroscopy and more preferably by positron annihilation lifetime spectroscopy. These are non-destructive spectroscopy techniques for studying voids and defects in solids. The measurement data may be interpreted according to the concept of free volume given by Simha and Boyer.

In this context according to a further preferred embodiment the glass-transition temperature T_{g} of the synthetic polar-polymer may be in the range of about ≥ -75°C to about ≤ 160°C, preferably about ≥ -50°C to about ≤ 120°C, further preferred about ≥ 0°C to about ≤ 115°C.

The glass transition may be the gradual and reversible transition in amorphous regions of the synthetic polar-polymer from a hard and relatively brittle state into a viscous or rubbery state as the temperature is increased. The glass transition temperature T_{g} of the synthetic polar-polymer may be determined by differential scanning calorimetry (DSC), which is a thermoanalytical technique in which the difference in the amount of heat required to increase the temperature of a sample and reference is measured as a function of temperature.

The glass transition temperature T_{g} of the synthetic polar-polymer may be determined according to the following standards: DIN 51007 (Thermal Analysis - Differential Thermal Analysis and Differential Scanning Calorimetry - General Principles), ASTM E 474, ASTM D 3418, DIN EN ISO 11357-1 (Plastics - Differential Scanning Thermal Analysis Part 1: General principles. (2008)), ISO 11357-2 (Plastics - Differential Scanning Calorimetry Part 2: Determination of the glass transition temperature. (1999)), ISO / DIS 11357-3 (Plastics - Differential Scanning Calorimetry Part 3: Determination of the melting and crystallization temperature and the melting and crystallization enthalpy. (2009)), ISO 11357-4(Plastics - Differential Scanning Thermal Analysis (DSC) Part 4: Determination of specific heat capacity. (2005)).

The glass transition temperature T_{g} of the synthetic polar-polymer may be determined using a Mettler Toledo DSC 3+ differential calorimeter, a sample amount of 10 +/- 1 mg, nitrogen as purge gas, and the following settings: 1. Heating: -40 °C to 280 °C with 20 °C/min, Hold: 3 minutes at 200 °C, Cooling: 280 °C to -40 °C at 10 °C/min, Hold: 5 minutes at -20 °C, 2. Heating: -40 °C to 300 °C at 20 °C/min.

With regard to the synthetic polar-polymer and the synthetic polar-oligomer:
a) the synthetic polar-polymer may be selected from the group comprising synthetic polarhomopolymers, synthetic polar-copolymers, and/or synthetic polar-terpolymers; and/or
b) the synthetic polar-oligomer may be selected from the group comprising synthetic polar-homo oligomers, synthetic polar-cooligomers, and/or synthetic polar-teroligomers.

A homopolymer or a homo oligomer may be a polymer or an oligomer that contains only a single type of repeat unit. A copolymer or a cooligomer may be a polymer or an oligomer that contains two types of repeat units. A terpolymer or a teroligomer may be a polymer or an oligomer that contains three types of repeat units. With regard to the copolymer, the cooligomer, the terpolymer, and the teroligomer the different types of repeat units may be organized along the backbone in different ways. There may be a controlled arrangement of the different repeat units, a statistical distribution of the different repeat units, and/or a longer sequence of one specific repeat unit alternating a longer sequence of a different specific repeat unit.

Preferably the two different types of repeat units in the copolymer or the cooligomer are organized in blocks such that the copolymer or the cooligomer is a block copolymer or block cooligomer. More preferably the first type of repeat unit is non-polar and preferably comprises only C and H atoms. Preferably the second type of repeat unit is polar and comprises more than 5 wt.-% of heteroatoms based on the total weight of the repeat unit, wherein a heteroatom is any atom excluding C and H. These block copolymers and block oligomers may have the advantage that the migration of the organic aromatic coloring agent into the synthetic polar-polymer material is enhanced due to the formation of micelles and kind of channels in the synthetic polar-polymer material. Therefore, using these block copolymers and/or block cooligomers may lead to a more homogenous coloring of the synthetic polar-polymer material. These block copolymers and block oligomers may be produced by (living) radical polymerization and or radical oligomerization and/or by using coordinative polymerization methods with metal complex catalysts.

### Synthetic polar-polymer or mixture

The synthetic polar-polymer or mixture thereof may be selected from the group comprising:
- polyacrylate with methyl (polymethylacrylate), ethyl (polyethylacrylate), propyl (polypropylacrylate), or butyl (polybutylacrylate),
- polymethacrylate with methyl (polymethylmathacrylate), ethyl (polyethylmethacrylate), propyl (polypropylmethacrylate), or butyl (polybutylmethacrylate),
- copolymers of acrylic and methacrylic esters including, among others, tert-Butyl (meth)acrylate, pentyl(meth)acrylate and 2-ethylhexyl(meth)acrylate; (Meth)acrylates derived from unsaturated alcohols, preferably oleyl(meth)acrylate, 2-propynyl(meth)acrylate, allyl(meth)acrylate, vinyl(meth)acrylate;

- aryl(meth)acrylates polymers, preferably benzyl(meth)acrylate polymers or phenyl(meth)acrylate polymers, the aryl radicals each being unsubstituted or up to four times substituted;
- cycloalkyl(meth)acrylates polymers, preferably 3-vinylcyclohexyl(meth)acrylate polymers, bornyl (meth)acrylate polymers;
- hydroxylalkyl (meth)acrylates polymers, preferably 3- hydroxypropyl (meth)acrylate polymers, 3,4- dihydroxybutyl(meth)acrylate polymers, 2-hydroxyethyl(meth)acrylate polymers, 2-hydroxypropyl(meth)acrylate polymers;
- glycol di(meth)acrylates polymers, preferably 1,4-butanediol (meth)acrylate polymers;
- (meth)acrylates of ether alcohols polymers, preferably tetrahydrofurfuryl (meth)acrylate polymers, vinyloxyethoxyethyl(meth)acrylate polymers;
- polymers of amides and nitriles of the (meth)acrylic acid, preferably N-(3-dimethylaminopropyl)(meth)acrylamide polymers, N-(diethylphosphono)(meth)acrylamide polymers, 1-methacryloylamido-2-methyl-2-propanol polymers;
- polymers of sulfur-containing methacrylates, preferably ethylsulfinylethyl( meth)acrylate, 4-thiocyanatobutyl(meth)acrylate polymers, ethylsulfonylethyl(meth)acrylate polymers, thiocyanatomethyl(meth)acrylate polymers, methylsulfinylmethyl(meth)acrylate polymers, bis((meth)acryloyloxyethyl)sulfide polymers;
- polyhydric (meth)acrylates, preferably trimethyloylpropanetri(meth)acrylate polymers;
- acrylonitrile polymers;
- vinyl ester polymers, preferably vinyl acetate polymers;
- styrene polymers, substituted styrenes polymers with an alkyl substituent in the side chain, preferably α-methylstyrene and α-ethylstyrene, substituted styrenes polymers with an alkyl substituent on the ring, preferably vinyl toluene, and *p*-methylstyrene, halogenated styrene polymers, preferably monochlorostyrene polymers, dichlorostyrene polymers, tribromostyrene polymers and tetrabromostyrene polymers;
- heterocyclic vinyl polymers, preferably 2-vinylpyridine polymers, 3-vinylpyridine polymers, 2-methyl-5-vinylpyridine polymers, 3-ethyl-4-vinylpyridine polymers, 2,3-dimethyl-5-vinylpyridine polymers, vinylpyrimidine polymers, vinylpiperidine polymers, 9-vinylcarbazole polymers, 3-vinylcarbazole polymers, 4-vinylcarbazole polymers, 1-vinylimidazole polymers, 2-methyl-1-vinylimidazole polymers, N-vinylpyrrolidone polymers, 2-vinylpyrrolidone polymers, N-vinylpyrrolidine polymers, 3-vinylpyrrolidine polymers, N-vinylcaprolactam polymers, N-vinylbutyrolactam polymers, vinyl oxolane polymers, vinyl furan polymers, vinyl thiophene polymers, vinylthiolane polymers, vinylthiazoles and hydrogenated vinylthiazoles polymers, vinyloxazoles and hydrogenated vinyloxazoles;
- polymers of vinyl and isoprenyl ethers;
- maleic acid polymers, preferably maleic anhydride polymers, methyl maleic anhydride polymers, maleimide polymers, methyl maleimide;
- copolymers of ethylene and propylene with acrylic esters, preferably polyethylen-block-co-polymethylmethacrylat, polypropylen-block-co-polymethylmethacrylat;
- aliphatic and/or aromatic polyesters, preferabl, hydroxyl-functional dendritic polyesters, polycaprolactone, polyethylenterephthalate (PET), polytrimethylenterephthalat (PTT), polybutylenterephthalat (PBT), glycolized polyglycolterephthaltat (G-PET), amorphous polyethylenterephthalat (A-PET), polyesters of terephthalic acid, polyspiro-diol-terephthalate, polypentaspiroglycol-terephthalate (PSG), polycyclohexylenedimethylene-terephthalate (PCT), polyester based copolymer including a dicarboxylic acid-derived residue including a residue derived from an aromatic dicarboxylic acid and a diol-derived residue including a residue derived from 4-(hydroxymethyl)cyclohexylmethyl-4'-(hydroxymethyl)cyclohexane carboxylate, polyester based copolymer including a dicarboxylic acid-derived residue including a residue derived from an aromatic dicarboxylic acid and a diol-derived residue including a residue derived from 4,4-(oxybis(methylene)bis) cyclohexane methanol;
- polycarbonate (PC), 2,2-Bis-(4-hydroxyphenyl)-propan (Bisphenol A) polycarbonate, 2,2-Bis-(4-hydroxyphenyl)-butan (Bisphenol B) polycarbonate, 1,1-Bis(4-hydroxyphenyl)cyclohexan (Bisphenol C) polycarbonate, 2,2'-Methylendiphenol (Bisphenol F) polycarbonate, 2,2-Bis(3,5-dibrom-4-hydroxyphenyl)propan (Tetrabrombisphenol A) polycarbonate und 2,2-Bis(3,5-dimethyl-4-hydroxyphenyl)propan (Tetramethylbisphenol A) polycarbonate, bisphenol S polycarbonate, dihydroxydiphenylsulfid polycarbonate, tetramethylbisphenol A polycarbonate, 1,1-Bis(4-hydroxyphenyl)-3,3,5-trimethylcyclohexane (BPTMC) polycarbonate, 1,1,1-Tris(4-hydroxyphenyl)-ethane (THPE) polycarbonate;
- aliphatic polyamide (PA), preferably PA 6 based on polycaprolactam, PA 6.6 based on 6,6-hexamethylendiamin and adipic acid, PA 6.66 based on caprolactam, co-poymer of hexamethylendiamin and adipic acid, PA 66.610 based on hexamethylendiamin, copolymer of adipic acid and sebaic acid, PA 4.6, PA10, PA 12 and PA copolymers;
- polyurethane (PU),
- polar-copolymere, maleic anhydride-olefin copolymer;
- polyalkylenoxide, polyalkylene block copolymer, propylenoxide-ethylenoxide copolymer, (m)ethylene acrylate-maleic anhydride copolymer;
- polar-terpolymere, preferably reactive terpolymers of ethylene, acrylic ester and maleic anhydride, or ethylene, methacrylic ester and maleic anhydride, or ethylene, acrylic esters and glycidyl methacrylate, or ethylene, methacrylic esters and glycidyl methacrylate, or ethylene, (meth)acrylic esters and methyl (methyl(meth)acrylate), ethyl (ethy(meth)acrylate), propyl (propyl(meth)acrylate), or butyl (butyl(meth)acrylate), polyamide, polyester-polyamides, or butyl (butyl(meth)acrylate), polyether-polyamide copolymers;
- polar polymer blends, preferably polycarbonate/polyethylenterephthalat blends (PC/PET blends), polycarbonate/polybutyleneterephthalate blends (PC/PBT blends), blends of polycyclohexylene dimethylene terephthalate copolymer, blends of poly(butylene-adipate-terephthalate);
- polyacrylnitril and polyacrylnitril-copolymers, preferably poly acrylonitrile butadiene styrene (ABS), poly styrene-acrylonitrile;
- polystyrene and polystyrene copolymers, preferably styrene/butadiene co-polymer (SBR), poly styrene-isoprene-styrene (SIS), poly(glycidyl methacrylate) grafted sulfonamide based polystyrene resin with tertiary amine;
- ethylene-vinyl acetate;
- polyether, preferably polyethyleneglycol, polyethyleneglycol with at least one fatty acid coupled to the polyethyleneglycol, terminating functional groups such NH₂-terminated polyethers;
- functionalized polyacrylamide polymers, copolymers and terpolymers, preferably poly(2-acrylamido-2-aminopropionicacid) (polyAMPA), poly(2-acrylamido-2-amino propane sulfonic acid), poly(N-isopropylacylamide (polyPNIPAM); poly (amidoamine-co-acrylic acid) copolymer, poly(N,N-dimethylacrylamide-co-sodium acrylate), poly(acrylamide-co-sodium acrylate)/poly(ethylene glycol) semi-IPN, poly(acrylamide-co-sodium 4-styrenesulfonate), poly(acrylamide-co-sodium 4-styrenesulfonate)/poly(ethylene glycol) semi-IPN, poly(acrylamide-co-sodium methacrylate), poly(acrylamide-co-sodium methacrylate)/poly(ethylene glycol) semi-IPN, and/or poly(N-isopropylacrylamide-co-acrylic acid) andpoly(acrylamide-co-acrylic acid;
- poly(ether sulfones)/poly(ethyleneimine) (PES/PEI);
- polyvinylpyrrolidone, preferably poly(N-vinyl-2-pyrrolidone), poly(N-vinyl-2-pyrrolidone-co-acrylonitrile) treated with hydroxylamine-hydrochloride
- polyvinyl alcohol; and/or
- poly(1-naphthylamine)-camphorsulphonic acid.

Other synthetic polar-polymer of amorphous copolyester that can be used are known under the tradename Akestra 90, 100 and 110. The above named synthetic polar-polymers may be used alone or in a mixture of two or more.

With regard to hydroxyl-functional dendritic polyesters that can be suitable used as a polar polymers, these molecules may be produced using polyalcohol cores, hydroxy acids and technology based on captive materials. The dendritic structures may be formed by polymerization of the particular core and 2,2-dimethylol propionic acid (Bis-MPA). The base products that may be obtained are hydroxyl-functional dendritic polyesters. They may be fully aliphatic and may consist only of tertiary ester bonds. They may provide excellent thermal and chemical resistance. Extensive branching also improves reactivity, lowers viscosity and results in balanced mechanical properties. The hydroxyl-functional dendritic polyesters may be known under the trade name Boltorn^{®}. The following dendritic polymers may be used as non-limiting examples: Boltorn^{®} H20 16 terminal hydroxyl groups, nominal molecular weight of 1750 g/mol, Boltorn^{®} H2004 6 terminal hydroxyl groups, nominal molecular weight of 3100 g/mol, Boltorn^{®} H311 23 terminal hydroxyl groups, nominal molecular weight of 5300 g/mol, Boltorn^{®} P500 Formulated bimodal product with terminal hydroxyl groups, nominal molecular weight 1800 g/mol, Boltorn^{®} P1000 formulated bimodal product with terminal hydroxyl groups, nominal molecular weight 1500 g/mol, Boltorn^{®} U3000 modified with unsaturated fatty acid, nominal molecular weight 6500 g/mol, Boltorn^{®} W3000 modified with non-ionic groups and unsaturated fatty acid, nominal molecular weight 10000 g/mol.

With regard to the polyester based copolymers that can be suitable used as a polar polymers, these may further include but not limited to a dicarboxylic acid-derived residue including a residue derived from an aromatic dicarboxylic acid and a diol-derived residue including a residue derived from 4-(hydroxymethyl)cyclohexylmethyl-4'-(hydroxymethyl)cyclohexane carboxylate represented by the following chemical formula 1 and a residue derived from 4,4-(oxybis(methylene)bis) cyclohexane methanol represented by the following chemical formula 2.

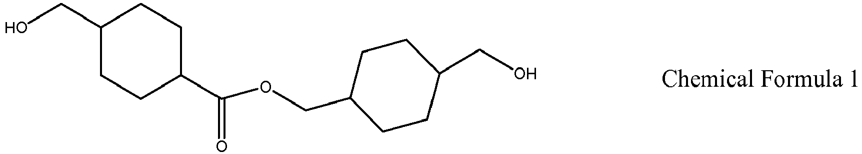

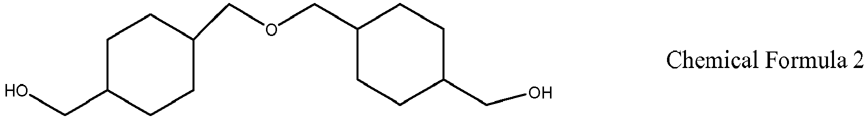

The compounds of chemical formula 1 and 2 can be copolymerized with aromatic dicarboxylic acid may be one or more selected from a group consisting of terephthalic acid, dimethyl terephthalate, cyclic dicarboxylic acid, isophthalic acid, adipic acid, azelaic acid, naphthalene dicarboxylic acid, and succinic acid.

The diol-derived residue of the copolymers may further include a residue derived from one or more other diols selected from a group consisting of 1,4-cyclohexane dimethanol, 1,2-propanediol, 1,3-propanediol, 1,4-butanediol, 2,2-dimethyl-1,3-propanediol, 1,6-hexanediol, 1,2-cyclohexanediol, 1,4-cyclohexanediol, 1,2-cyclohexane dimethanol, 1,3-cyclohexane dimethanol, 2,2-dimethylpropane-1,3-diol (neopentyl glycol), ethylene glycol, and diethylene glycol. A content of the diol derived residues of the residue derived from 4-(hydroxymethyl)cyclohexylmethyl 4'-(hydroxymethyl)cyclohexane carboxylate, the residue derived from 4,4-(oxybis(methylene)bis) cyclohexane methanol, and other diol-derived residues may be about 10 to 80 mol% based on 100 mol% of the dicarboxylic acid co-monomer.

The synthetic polar-polymer may also comprise the polyester based copolymers used in a mixture with polyethylene terephthalate (PET). The mixture may consist of 1 to 99 wt.-% of PET and 1 to 99 wt.-% of the polyester based copolymers, in order that both components add up to 100 wt.-%. Additionally or alternatively the compounds according to chemical formulas 1 and 2 may be used as co-monomers together with a further diol-component, e.g. ethylene glycol, in the preparation of the polyester based copolymers.

The polyester based copolymer may be prepared by reacting the dicarboxylic acid including the aromatic dicarboxylic acid with the diol including 4-(hydroxymethyl)cyclohexylmethyl 4'-(hydroxymethyl)cyclohexane carboxylate represented by chemical formula 1 and 4,4-(oxybis(methylene)bis) cyclohexane methanol represented by chemical formula 2 to perform an esterification reaction and a polycondensation reaction. In this case, other diols such as 1,4-cyclohexane dimethanol, ethylene glycol, diethylene glycol, or the like, as described above may be further reacted, such that a polyester based copolymer further including other diol-derived residues may be prepared.

With regard to the polyether, these may comprise but not limited to compounds that contain at least one polyethyleneglycol moiety and at least one fatty acid moiety coupled to the polyethyleneglycol moiety. The polyethyleneglycol moiety may contain 10 to 25 ethyleneglycol repeating units. The fatty acid moieties may be saturated or unsaturated and may contain 10 to 30 carbon atoms, preferably 16 to 22 carbon atoms. Examples of these fatty acid moieties are oleate, laureate, stearate, palmitate and ricinoleate. A specific preferred example may be ethoxylated sorbitan ester.

The ethoxylated sorbitan ester comprises a sorbitan group which is substituted by four polyethylene glycol substituents. The ethoxylated sorbitan ester may preferably comprise 14 to 26 ethylene glycol repeating units, preferably 16 to 24 ethylene glycol repeating units, more preferably between 18 and 22 repeating units. At least one of the ethylene glycol substituents in the ethoxylated sorbitan ester is connected via an ester bond to a fatty acid moiety. Preferably, at least two of the ethylene glycol substituents in the ethoxylated sorbitan ester are connected via an ester bond to a fatty acid moiety; more preferably at least three of the ethylene glycol substituents are connected via an ester bond to a fatty acid moiety. The fatty acid moieties may be saturated or unsaturated and may contain 10 to 30 carbon atoms, preferably 16 to 22 carbon atoms.

Examples of these fatty acid moieties are oleate, laureate, stearate and palmitate. Most preferred are ethoxylated sorbitan esters comprising four polyethylene glycol substituents and wherein the ester comprises between 18 and 22 ethylene glycol repeating units and wherein three of the ethylene glycol substituents are connected to oleate, laurate or stearate groups.

Examples of ethoxylated sorbitan esters that can be used as polar-polymer are polyoxyethylene (20) sorbitane monolaurate, polyoxyethylene (20) sorbitane dilaurate, polyoxyethylene (20) sorbitane trilaurate, polyoxyethylene (20) sorbitane mono-oleate, polyoxyethylene (20) sorbitane di-oleate, polyoxyethylene (20) sorbitane tri-oleate, polyoxyethylene (20) sorbitane monostearate, polyoxyethylene (20) sorbitane distearate, polyoxyethylene (20) sorbitane tristearate, and polyoxyethylene (20) sorbitan monooleate, also known as Polysorbate 80 and E433.

### Synthetic polar-oligomer and mixtures thereof

With respect to the synthetic polar-oligomer and according to another embodiment the synthetic polar-oligomer or mixture thereof may be selected from the group comprising:
- oligoacrylate with methyl (oligomethylacrylate), ethyl (oligoethylacrylate), propyl (oligopropylacrylate), or butyl (oligobutylacrylate),
- oligomethacrylate with methyl (oligomethylmathacrylate), ethyl (oligoethylmethacrylate), propyl (oligopropylmethacrylate), or butyl (oligobutylmethacrylate),
- cooligomers of acrylic and methacrylic esters including, among others, tert. - Butyl (meth)acrylate, pentyl(meth)acrylate and 2-ethylhexyl(meth)acrylate; (Meth)acrylates derived from unsaturated alcohols, preferably oleyl(meth)acrylate, 2-propynyl(meth)acrylate, allyl(meth)acrylate, vinyl(meth)acrylate;
- aryl(meth)acrylates oligomers, preferably benzyl(meth)acrylate oligomers or phenyl(meth)acrylate oligomers, the aryl radicals each being unsubstituted or up to four times substituted;
- cycloalkyl(meth)acrylates oligomers, preferably 3-vinylcyclohexyl(meth)acrylate oligomers, bornyl (meth)acrylate oligomers;
- hydroxylalkyl (meth)acrylates oligomers, preferably 3- hydroxypropyl (meth)acrylate oligomers, 3,4- dihydroxybutyl(meth)acrylate oligomers, 2-hydroxyethyl(meth)acrylate oligomers, 2-hydroxypropyl(meth)acrylate oligomers;
- glycol di(meth)acrylates oligomers, preferably 1,4-butanediol (meth)acrylate oligomers;
- (meth)acrylates of ether alcohols oligomers, preferably tetrahydrofurfuryl (meth)acrylate oligomers, vinyloxyethoxyethyl(meth)acrylate oligomers;
- oligomers of amides and nitriles of the (meth)acrylic acid, preferably N-(3-dimethylaminopropyl)(meth)acrylamide oligomers, N-(diethylphosphono)(meth)acrylamide oligomers, 1-methacryloylamido-2-methyl-2-propanol oligomers;
- oligomers of sulfur-containing methacrylates, preferably ethylsulfinylethyl( meth)acrylate, 4-thiocyanatobutyl(meth)acrylate oligomers, ethylsulfonylethyl(meth)acrylate oligomers, thiocyanatomethyl(meth)acrylate oligomers, methylsulfinylmethyl(meth)acrylate oligomers, bis((meth)acryloyloxyethyl)sulfide oligomers;
- oligohydric (meth)acrylates, preferably trimethyloylpropanetri(meth)acrylate oligomers;
- acrylonitrile oligomers;
- vinyl ester oligomers, preferably vinyl acetate oligomers;
- styrene oligomers, substituted styrenes oligomers with an alkyl substituent in the side chain, preferably α-methylstyrene and α -ethylstyrene, substituted styrenes oligomers with an alkyl substituent on the ring, preferably vinyl toluene, and p-methylstyrene, halogenated styrene oligomers, preferably monochlorostyrene oligomers, dichlorostyrene oligomers, tribromostyrene oligomers and tetrabromostyrene oligomers;
- heterocyclic vinyl oligomers, preferably 2-vinylpyridine oligomers, 3-vinylpyridine oligomers, 2-methyl-5-vinylpyridine oligomers, 3-ethyl-4-vinylpyridine oligomers, 2,3-dimethyl-5-vinylpyridine oligomers, vinylpyrimidine oligomers, vinylpiperidine oligomers, 9-vinylcarbazole oligomers, 3-vinylcarbazole oligomers, 4-vinylcarbazole oligomers, 1-vinylimidazole oligomers, 2-methyl-1-vinylimidazole oligomers, N-vinylpyrrolidone oligomers, 2-vinylpyrrolidone oligomers, N-vinylpyrrolidine oligomers, 3-vinylpyrrolidine oligomers, N-vinylcaprolactam oligomers, N-vinylbutyrolactam oligomers, vinyl oxolane oligomers, vinyl furan oligomers, vinyl thiophene oligomers, vinylthiolane oligomers, vinylthiazoles and hydrogenated vinylthiazoles oligomers, vinyloxazoles and hydrogenated vinyloxazoles;
- oligomers of vinyl and isoprenyl ethers;
- maleic acid oligomers, preferably maleic anhydride oligomers, methyl maleic anhydride oligomers, maleimide oligomers, methyl maleimide; and
- cooligomers of ethylene and propylene with acrylic esters, preferably oligoethylen-block-co-oligomethylmethacrylat, oligopropylen-block-co-oligomethylmethacrylat;
- aliphatic and/or aromatic oligoesters, preferably oligocaprolactone, oligoethylenterephthalate (PET), oligotrimethylenterephthalat (PTT), oligobutylenterephthalat (PBT), glycolized oligoglycolterephthaltat (G-PET), amorphes oligoethylenterephthalat (A-PET), oligoesters of terephthalic acid, oligospiro-diol-terephthalate, oligopentaspiroglycol-terephthalate (PSG), polycyclohexylenedimethylene-terephthalate, oligoester based cooligomer including a dicarboxylic acid-derived residue including a residue derived from an aromatic dicarboxylic acid and a diol-derived residue including a residue derived from 4-(hydroxymethyl)cyclohexylmethyl-4'-(hydroxymethyl)cyclohexane carboxylate, oligester based cooligomer including a dicarboxylic acid-derived residue including a residue derived from an aromatic dicarboxylic acid and a diol-derived residue including a residue derived from 4,4-(oxybis(methylene)bis) cyclohexane methanol;
- oligocarbonate (PC), 2,2-Bis-(4-hydroxyphenyl)-propan (Bisphenol A) oligocarbonate, 2,2-Bis-(4-hydroxyphenyl)-butan (Bisphenol B) oligocarbonate, 1,1-Bis(4-hydroxyphenyl)cyclohexan (Bisphenol C) oligocarbonate, 2,2'-Methylendiphenol (Bisphenol F) oligocarbonate, 2,2-Bis(3,5-dibrom-4-hydroxyphenyl)propan (Tetrabrombisphenol A) oligocarbonate und 2,2-Bis(3,5-dimethyl-4-hydroxyphenyl)propan (Tetramethylbisphenol A) oligocarbonate, bisphenol S oligocarbonate, dihydroxydiphenylsulfid oligocarbonate, tetramethylbisphenol A oligocarbonate, 1,1-Bis(4-hydroxyphenyl)-3,3,5-trimethylcyclohexane (BPTMC) oligocarbonate, 1,1,1-Tris(4-hydroxyphenyl)-ethane (THPE) oligocarbonate;
- aliphatic oligoamide (PA), preferably PA 6 based on oligocaprolactam, PA 6.6 based on 6,6-hexamethylendiamin and adipic acid, PA 6.66 based on caprolactam, co-poymer of hexamethylendiamin and adipic acid, PA 66.610 based on hexamethylenediamine, cooligomer of adipic acid and sebaic acid, PA 4.6, PA10, PA 12 and PA cooligomers;
- oligourethane (PU),
- polar-cooligomere, maleic anhydride-olefin cooligomer;
- oligoalkylenoxide, oligoalkylene block cooligomer, propylenoxide-ethylenoxide cooligomer, (m)ethylene acrylate-maleic anhydride cooligomer;
- polar-teroligomere, preferably reactive teroligomers of ethylene, acrylic ester and maleic anhydride, or ethylene, methacrylic ester and maleic anhydride, or ethylene, acrylic esters and glycidyl methacrylate, or ethylene, methacrylic esters and glycidyl methacrylate, or ethylene, (meth)acrylic esters and methyl (methyl(meth)acrylate), ethyl (ethy(meth)acrylate), propyl (propyl(meth)acrylate), or butyl (butyl(meth)acrylate), oligoamide, oligoester-oligoamides, or butyl (butyl(meth)acrylate), oligoether-oligoamide cooligomers;
- polar oligomer blends, preferably oligocarbonate/oligoethylenterephthalat blends (PC/PET blends), oligocarbonate/oligobutyleneterephthalate blends (PC/PBT blends), blends of oligocyclohexylene dimethylene terephthalate cooligomer, blends of oligo(butylene-adipate-terephthalate);
- oligoacrylnitril and oligoacrylnitril-cooligomers, preferably oligo acrylonitrile butadiene styrene (ABS), oligo styrene-acrylonitrile;
- oligostyrene and oligostyrene cooligomers, preferably styrene/butadiene co-oligomer (SBR), oligo styrene-isoprene-styrene (SIS), oligo(glycidyl methacrylate) grafted sulfonamide based oligostyrene resin with tertiary amine;
- ethylene-vinyl acetate;
- oligoether, preferably oligoethyleneglycol, oligoethyleneglycol with at least one fatty acid coupled to the oligoethyleneglycol, oligoether with terminating functional groups, preferbyl NH₂-terminated oligoethers,
- functionalized oligoacrylamide oligomers, cooligomers and teroligomers, preferably oligo(2-acrylamido-2-aminopropionicacid) (oligoAMPA), oligo(2-acrylamido-2-amino propane sulfonic acid), oligo(N-isopropylacylamide (oligoPNIPAM); oligo (amidoamine-co-acrylic acid) co-oligomer, oligo(N,N-dimethylacrylamide-co-sodium acrylate), oligo(acrylamide-co-sodium acrylate)/oligo(ethylene glycol) semi-IPN, oligo(acrylamide-co-sodium 4-styrenesulfonate), oligo(acrylamide-co-sodium 4-styrenesulfonate)/oligo(ethylene glycol) semi-IPN, oligo(acrylamide-co-sodium methacrylate), oligo(acrylamide-co-sodium methacrylate)/oligo(ethylene glycol) semi-IPN, and/or oligo(N-isopropylacrylamide-co-acrylic acid) andoligo(acrylamide-co-acrylic acid;
- oligo(ether sulfones)/oligo(ethyleneimine) (PES/PEI);
- oligovinylpyrrolidone, preferably oligo(N-vinyl-2-pyrrolidone), oligo(N-vinyl-2-pyrrolidone-co-acrylonitrile) treated with hydroxylamine-hydrochloride
- oligovinyl alcohol;
- oligo(1-naphthylamine)-camphorsulphonic acid; and mixtures thereof.

With regard to the oligoester based cooligomers that can be suitable used as a polar oligomers, these may further include but not limited to a dicarboxylic acid-derived residue including a residue derived from an aromatic dicarboxylic acid and a diol-derived residue including a residue derived from 4-(hydroxymethyl)cyclohexylmethyl-4'-(hydroxymethyl)cyclohexane carboxylate represented by the following chemical formula 1 and a residue derived from 4,4-(oxybis(methylene)bis) cyclohexane methanol represented by the following chemical formula 2.

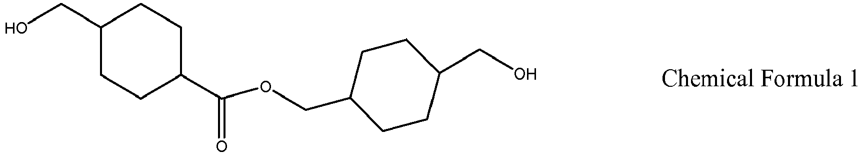

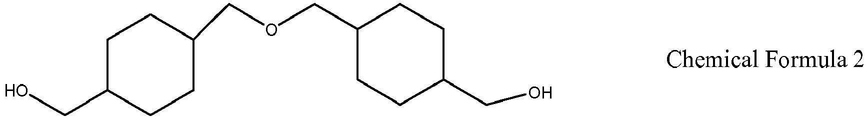

The compounds of chemical formula 1 and 2 can be cooligomerized with aromatic dicarboxylic acid may be one or more selected from a group consisting of terephthalic acid, dimethyl terephthalate, cyclic dicarboxylic acid, isophthalic acid, adipic acid, azelaic acid, naphthalene dicarboxylic acid, and succinic acid.

The diol-derived residue of the cooligomers may further include a residue derived from one or more other diols selected from a group consisting of 1,4-cyclohexane dimethanol, 1,2-propanediol, 1,3-propanediol, 1,4-butanediol, 2,2-dimethyl-1,3-propanediol, 1,6-hexanediol, 1,2-cyclohexanediol, 1,4-cyclohexanediol, 1,2-cyclohexane dimethanol, 1,3-cyclohexane dimethanol, 2,2-dimethylpropane-1,3-diol (neopentyl glycol), ethylene glycol, and diethylene glycol. A content of the diol derived residues of the residue derived from 4-(hydroxymethyl)cyclohexylmethyl 4'-(hydroxymethyl)cyclohexane carboxylate, the residue derived from 4,4-(oxybis(methylene)bis) cyclohexane methanol, and other diol-derived residues may be about 10 to 80 mol% based on 100 mol% of the dicarboxylic acid co-monomer.

The synthetic polar-oligomer may also comprise the oligoester based cooligomers used in a mixture with oligoethylene terephthalate (PET). The mixture may consist of 1 to 99 wt.-% of PET and 1 to 99 wt.-% of the oligoester based cooligomers, in order that both components add up to 100 wt.-%. Additionally or alternatively the compounds according to chemical formulas 1 and 2 may be used as co-monomers together with a further diol-component, e.g. ethylene glycol, in the preparation of the oligoester based cooligomers.

The oligoester based cooligomer may be prepared by reacting the dicarboxylic acid including the aromatic dicarboxylic acid with the diol including 4-(hydroxymethyl)cyclohexylmethyl 4'-(hydroxymethyl)cyclohexane carboxylate represented by chemical formula 1 and 4,4-(oxybis(methylene)bis) cyclohexane methanol represented by chemical formula 2 to perform an esterification reaction and a oligocondensation reaction. In this case, other diols such as 1,4-cyclohexane dimethanol, ethylene glycol, diethylene glycol, or the like, as described above may be further reacted, such that a oligoester based cooligomer further including other diol-derived residues may be prepared.

With regard to the oligoether these may comprise but not limited to compounds that contains at least one oligoethyleneglycol moiety and at least one fatty acid moiety coupled to the oligoethyleneglycol moiety. The oligoethyleneglycol moiety may contain 8 or 9 ethyleneglycol repeating units.

The fatty acid moieties may be saturated or unsaturated and may contain 10 to 30 carbon atoms, preferably 16 to 22 carbon atoms.

Examples of these fatty acid moieties are oleate, laureate, stearate, palmitate and ricinoleate. Examples of compound that contain at least one polyethyleneglycol moiety and at least one fatty acid moiety coupled to the polyethyleneglycol moiety include PEG 300 di-oleate, PEG 300-distearate, PEG 400 dioleate, PEG 400 distearate, PEG 400 monooleate, PEG 400 monoricinoleate, PEG 400 monostearate.

A specific preferred example may be ethoxylated sorbitan oligoester. The ethoxylated sorbitan oligoester comprises a sorbitan group which is substituted by four oligoethylene glycol substituents. The ethoxylated sorbitan ester may preferably comprise 14 to 26 ethylene glycol repeating units, preferably 16 to 24 ethylene glycol repeating units, more preferably between 18 and 22 repeating units. At least one of the ethylene glycol substituents in the ethoxylated sorbitan ester is connected via an ester bond to a fatty acid moiety. Preferably, at least two of the ethylene glycol substituents in the ethoxylated sorbitan ester are connected via an ester bond to a fatty acid moiety; more preferably at least three of the ethylene glycol substituents are connected via an ester bond to a fatty acid moiety. The fatty acid moieties may be saturated or unsaturated and may contain 10 to 30 carbon atoms, preferably 16 to 22 carbon atoms.

Examples of these fatty acid moieties are oleate, laureate, stearate and palmitate. Most preferred are ethoxylated sorbitan esters comprising four oligoethylene glycol substituents and wherein the ester comprises between 18 and 22 ethylene glycol repeating units and wherein three of the ethylene glycol substituents are connected to oleate, laurate or stearate groups.

### Polar-additive and mixtures thereof

The polar additive may be solid at 23 °C. The polar additive may not be a dye. The polar additive may be solid at 23 °C and is not a dye. The polar additive may be solid at 23 °C and is not a dye, is selected different from the dispersing agent and is selected different from the solubilizer.

In connection to the polar-additive and according to an another embodiment the polar-additive having a Mw about ≥ 70 and < 600 g/mol may be selected from the group comprising aliphatic acids CH₃-[CH₂]ₙ-COOH acids (n about ≥ 3), amino acids, carboxylic acid amide, hydroxyl acids, fatty acids, aliphatic or aliphatic/aromatic aldehydes and ketones, esters, pentaerythritol, pentaerythritol dimers, pentaerythritol trimers, pentaerythritol ester preferably carboxylic acid ester, benzoic acid esters comprising benzylbenzoat or phenylbenzoat, phenylether, alcohols and polyvalent alcohols, preferably glycerine, amines, wherein the polar-additive is selected different to the organic aromatic coloring agent having a molecular weight Mw in the range of about ≥ 250 g/mol to about ≤ 550 g/mol; and preferably the polar-additive having a Mw about ≥ 100 and < 600 g/mol is containing a heteroatom selected from N, O, S and/or halogene. Preferably, halogens may be selected from the group comprising Cl, Br and I.

The carboxylic acid amide may comprise a compound according to formula C₂H₄(NHC(O)R³)₂, wherein R³ is a fatty acid moiety comprising 10-17 carbon atoms. The fatty acid moieties may be saturated or unsaturated. When the amount of carboxylic acid amide is too high the colored polar-polymer material may show blooming. Blooming i.e. discolorations may be caused by phase separation of the material's components. It may be caused by incompatibilities of the polar-additive with the polar-polymer and/or with the polar-polymer material.

Pentaerythritol may comprise a compound according to formula C(CH₂OR)₄, wherein R may be H, or wherein R may be a fatty acid moiety comprising 5-8 carbon atoms. The fatty acid moieties can be saturated or unsaturated. R may be also another moiety like ether, amide and/or urethane. As Pentaerythritol Perstorp Charmor PM 40 may be used.

Furthermore the polar additive may be an ether. Ether these may comprise but not limited to compounds that contains at least one ethyleneglycol moiety and at least one fatty acid moiety coupled to the ethyleneglycol moiety.

Examples of compound that contains at least one ethyleneglycol moiety and at least one fatty acid moiety coupled to the polyethyleneglycol moiety include PEG 300-monostearate, PEG 400 monolaurate.

The carboxylic acid ester may comprise a compound according to the following chemical formula 3: 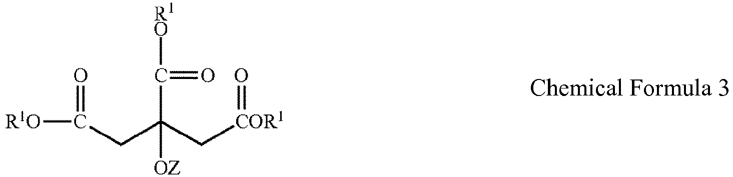 wherein R¹ is an alkyl group comprising 1-20 carbon atoms and Z is hydrogen or a group according to the formula C(O)R², wherein R² is an alkyl group comprising 1-20 carbon atoms. R¹ may be the same or different and is an alkyl group comprising 1-20 carbon atoms, preferably 1-15 carbon atoms, more preferably 1-10 carbon atoms. R² is an alkyl group comprising 1-20 carbon atoms, preferably 1-10 carbon atoms, more preferably 1-5 carbon atoms. Non-limiting examples of the carboxylic acid ester are triethylcitrate, tributylcitrate, trihexylcitrate, acetyltributylcitrate (ATBC; R¹ = C₄H₉, Z = CH₃CO), propanoyltributylcitrate, acetyltrihexylcitrate and butanoyltriethylcitrate.

Furthermore, as polar-additive 4-(hydroxymethyl)cyclohexylmethyl-4'-(hydroxymethyl)cyclohexane carboxylate represented by the chemical formula 1, 4,4-(oxybis(methylene)bis) cyclohexane methanol represented by the chemical formula 2, and mixtures thereof may be used:

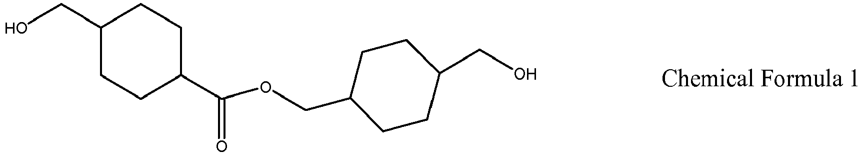

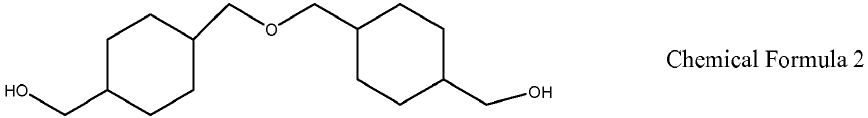

As already mentioned above, the synthetic polar-polymer material that is colored may comprise a composition of a non-polar-polymer having a Mw about ≥ 1000 g/mol. In connection to this non-polar-polymer having a Mw about ≥ 1000 g/mol and according to an another embodiment the non-polar-polymer may be selected from the group of polyalkylene polymers, polyalkylene copolymers, polyakylene block copolymers. The non-polar-polymer may be preferably selected from of polymeric aliphatic or aromatic hydrocarbons, preferably polyalkylene polymers, polyalkylene co- and terpolymer with random or block-structure; and more preferred from polyethylen (PE), polypropylene (PP), polybutene (PB), polystyrene, polyisobutylene, polybutadiene, polyisoprene. Preferably the non-polar-polymer may have a wt.-% of heteroatoms below 5 wt.-% with respect to the mass of the non-polar-polymer.

### Organic aromatic coloring agent

The organic aromatic coloring agent is not a chemical reactive dye. That means the organic aromatic coloring agent as used in the present invention doesn't covalently bond to a component of the polymer material that is colorized by the organic aromatic coloring agent. In this context forming no chemical covalent bond means that the organic aromatic coloring agent does not form a covalent sigma bond, covalent double bound, covalent triple bond or any other chemical covalent bond with the synthetic polar-polymer material or with a component of the synthetic polar polymer material.

The organic aromatic coloring agent for example adsorbs and/or absorbs to the polar-polymer component.

The organic aromatic coloring agent may have a molecular weight Mw in the range of about ≥ 250 g/mol to about ≤ 550 g/mol, preferably the organic aromatic coloring agent has a molecular weight Mw in the range of about ≥ 270 g/mol to about ≤ 450 g/mol, and more preferably the organic aromatic coloring agent has a molecular weight Mw in the range of about ≥ 285 g/mol to about ≤ 400 g/mol.

The organic aromatic coloring agent may absorb light in the visible spectrum; therefore it may appear to be colored for a human observer. Furthermore it may also be possible that the organic aromatic coloring agent absorbs light in the UV or in the infrared region of the electromagnetic spectrum. In this case the organic aromatic coloring agent may not appear to have a visible color to a human observer. It may also be possible that the organic aromatic coloring agent is a stabilizer to prevent the oxidation, chain fission, uncontrolled recombination and/or cross-linking reaction that are caused by photo-oxidation of the synthetic polar polymer material. The synthetic polar polymer material may become weathered by the direct or indirect impact of heat and ultraviolet light. This effect may be hindered by hindered amine light stabilizers (HALS).

Furthermore, the solubility of the organic aromatic coloring agent in water may be low. According to an another embodiment the organic aromatic coloring agent may have a solubility in water at 23 °C of about ≤ 0.1 g/l and > 0 g/l, preferably about ≤ 0.01 g/l and > 0 g/l, more preferably about ≤ 0.001 g/l and > 0 g/l.

The organic aromatic coloring agent comprises at least 2 to 6 aromatic six-membered rings, or at least 3 to 5 aromatic six-membered rings and at least 1 to 4 five-membered rings. Furthermore, the aromatic coloring agent has at least 2 to 6 aromatic six-membered rings and the organic aromatic coloring agent may comprises at least on heteroatom selected from N, O, S, Br.

Preferably the organic aromatic coloring agent is selected from the group comprising the following chemical formulas A1 to A10 according to table 1:

**Table 1**

| | |
|---|---|
| Chemical formula A1 | 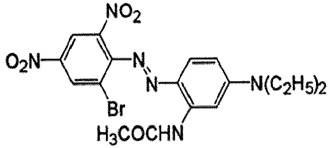 |
| Chemical formula A2 | 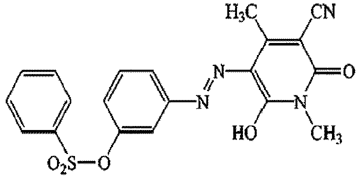 |
| Chemical formula A3 | 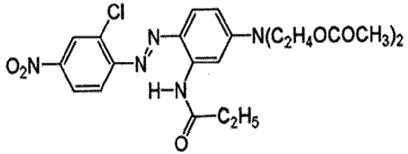 |
| Chemical formula A4 | 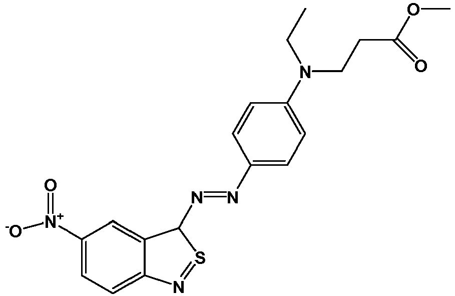 |
| Chemical formula A5 | 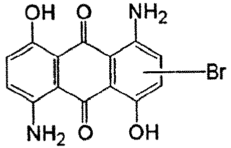 |
| Chemical formula A6 | 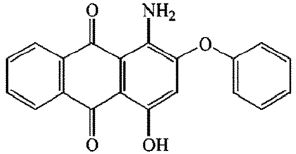 |
| Chemical formula A7 | 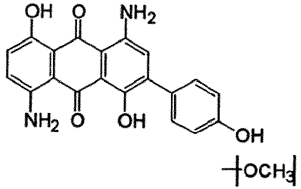 |
| Chemical formula A8 | 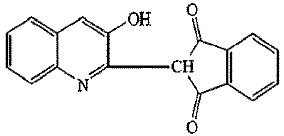 |
| Chemical formula A9 | 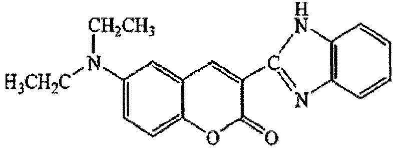 |
| Chemical formula A10 | 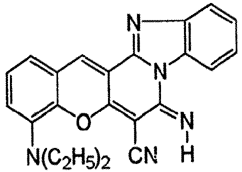 |

Regarding the chemical formula A7, the methoxy group -[OCH₃] may be an alternative for the hydroxyl group -[OH] on the aromatic moiety, that is not part of the anthraquinone ring system.

Further the organic aromatic coloring agent may be selected from the group comprising Bis(2,2,6,6-tetramethyl-4-piperidyl)sebacat, methyl 1,2,2,6,6-pentamethyl-4-piperidyl sebacate, 2,2'-Thiobis(4-tert-octylphenolato)-n-butylamine nickel(II), N-(2-Ethoxyphenyl)-N'-(4-ethylphenyl)-ethlyene diamide. The organic aromatic coloring agent may include UV-absorbers form the company European Additives GmbH and the light stabilizers from the company MPI Chemie B.V.

Preferably the organic aromatic coloring agent is selected from the group comprising the coloring agents known under the trademark BEMACRON S/SE/E from CHT Germany GmbH, or from Dystar Pte Ltd. Preferably the organic aromatic coloring agent is selected from the group comprising BEMACRON Yellow S-6GF, BEMACRON Yellow S-4g, BEMACRON Yellow Brown S-2RFl, BEMACRON Orange S-g, BEMACRON Scarlet S-gFl, BEMACRON Scarlet S-BWFl, BEMACRON Rubine S-2GFL, BEMACRON Violet S-3Rl, BEMACRON Violet S-BlF, BEMACRON Blue S-Bgl, BEMACRON Blue S-BB, BEMACRON Turquoise S-gF, BEMACRON Navy S-2gl, BEMACRON Navy S-3l, BEMACRON Black S-3l, BEMACRON Black S-T, BEMACRON Yellow SE-Rdl, BEMACRON Yellow SE-lF, BEMACRON Orange SE-Rdl, BEMACRON Red SE-4g, BEMACRON Pink SE-REl, BEMACRON Red SE-3B, BEMACRON Red SE-Rdl, BEMACRON Blue SE-lF, BEMACRON Blue SE-Rdl, BEMACRON Navy SE-RlX, BEMACRON Black SE-RlX, BEMACRON Black SE-Rd2R, BEMACRON Yellow E-3gl, BEMACRON Red E-FB1, BEMACRON Blue E-FB1, and BEMACRON Black E-R.

More preferably the organic aromatic coloring agent is selected from the group comprising BEMACRON Black E-R, BEMACRON Yellow S-6GF, BEMACRON Rubine S-2GFL, BEMACRON Blue RS, BEMACRON Blue E-FBL 150, BEMACRON Red E-FBL, BEMACRON Blue S-BGL, BEMACRON Yellow E-3gl, BEMACRON Lumin. Yellow SEL-8G, and BEMACRON Lumin. Red SEL-G.

Preferably the aromatic coloring agent may not comprise a phthalocyanine.

### Dispersing agent

The dispersing agent may be selected from the group comprising at least one:
- anionic tenside, preferably selected from polyphosphates, polyacrylates, aromatic sulfonates, esters with ethoxylate groups, esters with sulfonate groups, fatty acid-based polymers with an anionic group, salts of polycarboxylic acids, ethoxylates, thiourea dioxide;
- cationic tenside, preferably selected from quaternary ammonium compounds, fatty acidpolymers with a cationic group per molecule;
- non-ionic tenside, preferably selected from aromatic esters and hydrocarbons, aromatic and non-aromatic carboxylic acid esters, ethyl acrylate, fatty acid esters, ethoxylated fatty acid, polymers that are fatty acid-based with a non-ionic group per molecule, acrylate-copolymers, acrylate/styrene copolymers, fatty acid derivatives, polyalkoxylate;
- polyurethane (PUR) polymers and/or polyacrylate polymers, preferably linear or branched polyurethane (PUR) polymers and/or polyacrylate polymers, more preferred the polyurethane (PUR) polymer and/or polyacrylate polymer having a MW of 5000 to 30000 g/mol.

The polyacrylate polymers may be preferably selected from the Efka^{®} 4000 series from BASF SE.

The dispersing agent may contain tertiary nitrogen compounds.

A dispersing agent that can be suitable used may be a substance that holds two or more immiscible liquids or solids in suspension, e.g., water and the organic aromatic coloring agent. Dispersing agents which may be used include ionic dispersing agent, non-ionic dispersing agent, or mixtures thereof. Typical ionic dispersing agents are anionic dispersing agents, including amine salts or alkali salts of carboxylic, sulfamic or phosphoric acids, for example, sodium lauryl sulfate, ammonium lauryl sulfate, lignosulfonic acid salts, ethylene diamine tetra acetic acid (EDTA) sodium salts and acid salts of amines such as laurylamine hydrochloride or poly(oxy-1,2 ethanediylphenyl)alpha-sulfo-omega-hydroxy ether with phenol 1-(methylphenyl)ethyl derivative ammonium salts; or amphoteric, that is, compounds bearing both anionic and cationic groups, for example, lauryl sulfobetaine; dihydroxy ethylalkyl betaine; amido betaine based on coconut acids; disodium N-lauryl amino propionate; or the sodium salts of dicarboxylic acid coconut derivatives. Typical non-ionic dispersing agents include but not limited to ethoxylated or propoxylated alkyl or aryl phenolic compounds, such as, octylphenoxypolyethyleneoxyethanol or poly(oxy-1,2-ethanediyl)alpha-phenyl-omega-hydroxy, styrenated. An another dispersing agent may be a mixture of C₁₄-C₁₈ and C₁₆-C₁₈ ethoxylated unsaturated fatty acids and poly(oxy-1,2-ethanediyl)alpha-sulfo-omega-hydroxy ether with phenol 1-(methylphenyl)ethyl derivative ammonium salts and poly(oxy-1,2-ethanediyl), alpha-phenyl-omega-hydroxy, styrenated.

### Nonionic Dispersing Agents

Exemplary nonionic dispersing agents, also named nonionic tenside, that can be used in the aqueous dispersed coloring solution are alkoxylated, preferably ethoxylated or ethoxylated and propoxylated, fatty acid alkyl esters preferably containing 1 to 4 carbon atoms in the alkyl chain, more particularly the fatty acid methyl esters.

The nonionic low alkoxylated alcohol dispersing agents can be used to reduce surface tension, wet the soil particulate to allow penetration of the use solution, separation of the soil.

The alkoxylated alcohol dispersing agents mentioned above includes end caped alkoxylated alcohol dispersing agents.

Exemplary nonionic low alkoxylated alcohol dispersing agents that can be used are alkoxylated alcohols containing 1 to 4 ethylene oxide groups (1-4EO), 1 to 4 butylene oxide groups (1-4BO), 1 to 4 propylene oxide groups (1-4PO), end caped alkoxylated alcohol dispersing agents thereof or mixtures thereof.

Advantageously low alkoxylated alcohols useful according to the invention are particularly primary and/or branched alcohols, preferably containing 8 to 18 carbon atoms, and containing 1 to 4 ethylene oxide groups (1-4EO), 1 to 4 butylene oxide groups (1-4BO), 1 to 4 propylene oxide groups (1-4PO), end caped alkoxylated alcohol dispersing agents thereof or may contain a mixture. The alcohol radical may be linear, branched, or may contain a mixture.

Exemplary nonionic higher alkoxylated alcohol dispersing agents suitable for use in the aqueous dispersed coloring solution are alkoxylated alcohols containing 5 to 40 ethylene oxide groups (5-40EO), butylene oxide groups (5-40BO), propylene oxide groups (5-40PO), preferably 6 to 30 ethylene oxide groups (6-30EO), butylene oxide groups (6-30BO), propylene oxide groups (6-30PO), further preferred 7 to 20 ethylene oxide groups (7-20EO), butylene oxide groups (7-20BO), propylene oxide groups (7-20PO), more preferred 8 to 10 ethylene oxide groups (8-10EO), butylene oxide groups (8-10BO), propylene oxide groups (8-10PO), and most preferred 8 ethylene oxide groups (8EO), butylene oxide groups (8BO), propylene oxide groups (8PO) groups, end caped alkoxylated alcohol dispersing agents thereof, or mixtures thereof.

Advantageously higher alkoxylated alcohols useful in the composition of the invention are particularly linear and/or branched alcohols, preferably containing 8 to 18 carbon atoms, and 5 to 40 ethylene oxide groups (5-40EO), butylene oxide groups (5-40BO), propylene oxide groups (5-40PO), preferably 6 to 30 ethylene oxide groups (6-30EO), butylene oxide groups (6-30BO), propylene oxide groups (6-30PO), further preferred 7 to 20 ethylene oxide groups (7-20EO), butylene oxide groups (7-20BO), propylene oxide groups (7-20PO), more preferred 8 to 10 ethylene oxide groups (8-10EO), butylene oxide groups (8-10BO), propylene oxide groups (8-10PO), and most preferred 8 ethylene oxide groups (8EO), butylene oxide groups (8BO), propylene oxide groups (8PO), end caped alkoxylated alcohol dispersing agents thereof, or may contain a mixture. The alcohol radical may be linear, branched, or may contain a mixture.

Particularly preferred are higher alkoxylated alcohols, preferably alcohol ethoxylates with linear or branched radicals of alcohols with 12 to 18 carbon atoms, e.g. from coco-, palm-, tallow- or oleyl alcohol, containing 8 to 18 carbon atoms, and 5 to 40 ethylene oxide groups (5-40EO), butylene oxide groups (5-40BO), propylene oxide groups (5-40PO), preferably 6 to 30 ethylene oxide groups (6-30EO), butylene oxide groups (6-30BO), propylene oxide groups (6-30PO), further preferred 7 to 20 ethylene oxide groups (7-20EO), butylene oxide groups (7-20BO), propylene oxide groups (7-20PO), more preferred 8 to 10 ethylene oxide groups (8-10EO), butylene oxide groups (8-10BO), propylene oxide groups (8-10PO), and most preferred 8 ethylene oxide groups (8EO), butylene oxide groups (8BO), propylene oxide groups (8PO), end caped alkoxylated alcohol dispersing agents thereof, or may contain a mixture. However, most preferred is isotridecyl alcohol in the composition of the invention with 6EO to 14EO, 6PO to 14PO, 6BO to 14BO, preferably 7EO to 10EO, 7PO to 10PO, 7BO to 10BO, and most preferred 8EO, 8PO, 8BO, or may contain a mixture.

According to the present invention higher alkoxylated alcohols can be used with 5EO, 6EO, 7EO, 8EO, 9EO, 10EO, 11EO, 12EO, 13EO, 14EO, 15EO, 16EO,17EO, 18EO, 19EO, 20EO, 21EO, 22EO, 23EO, 24EO or 25EO, 5PO, 6PO, 7PO, 8PO, 9PO, 10PO, 11PO, 12PO, 13PO, 14PO, 15PO, 16PO,17PO, 18PO, 19PO, 20PO, 21PO, 22PO, 23PO, 24PO or 25PO, 5BO, 6BO, 7BO, 8BO, 9BO, 10BO, 11BO, 12BO, 13BO, 14BO, 15BO, 16BO,17BO, 18BO, 19BO, 20BO, 21BO, 22BO, 23BO, 24BO or 25BO, end caped alkoxylated alcohol dispersing agents thereof, or may contain a mixture.

Exemplary higher alkoxylated alcohols with 5EO to 40EO, preferably 6EO or 30EO, further preferred 7EO to 20EO, more preferred 8EO to 10EO and most preferred 8EO; 5PO to 40PO, preferably 6PO or 30PO, further preferred 7PO to 20PO, more preferred 8PO to 10PO and most preferred 8PO; 5BO to 40BO, preferably 6BO or 30BO, further preferred 7BO to 20BO, more preferred 8BO to 10BO and most preferred 8BO include C₁₂-C₁₄-alcohols; C₉-C₁₁-alcohols, C₁₃-C₁₅- alcohols, C₁₂-C₁₈-alcohols, end caped alkoxylated alcohol dispersing agents thereof, and mixtures thereof, as well as mixtures of C₁₂-C₁₄-alcohols and C₁₂-C₁₈ -alcohols, end caped alkoxylated alcohol dispersing agents thereof, and most preferred is a C₁₃-alcohol.

In addition to these nonionic dispersing agents, fatty alcohols containing more than 12 EO, 12 PO, 12 BO may also be used. Examples of such fatty alcohols are tallow fatty alcohol containing 14 EO, 25 EO, 30 EO or 40 EO, 14 PO, 25 PO, 30 PO or 40 PO, 14 BO, 25 BO, 30 BO or 40 BO and end caped alkoxylated alcohol dispersing agents thereof.

The degrees of 5EO to 40EO, 5PO to 40PO, 5BO to 40BO preferably 6EO or 30EO, 6PO or 30PO, 6BO or 30BO,further preferred 7EO to 20EO, 7PO to 20PO, 7BO to 20BO,more preferred 8EO to 10 EO, 8PO to 10 PO, 8BO to 10 BO and most preferred 8EO, 8PO, 8BO alkoxylation mentioned are statistical mean values, which for a special product, may be either a whole number or a fractional number. However, more preferred, the degrees of 5EO to 40EO, 5PO to 40PO , 5BO to 40BO preferably 6EO or 30EO, 6PO or 30PO , 6BO or 30BO further preferred 7EO to 20EO, 7PO to 20PO , 7BO to 20BO, more preferred 8EO to 10 EO, 8PO to 10 PO, 8BO to 10 BO and most preferred 8EO, 8PO, 8BO alkoxylation mentioned may be either a whole number or a fractional number. Most preferred, the degrees of 5EO to 40EO, 5PO to 40PO, 5BO to 40BO, preferably 6EO or 30EO, 6PO or 30PO, 6BO or 30BO, further preferred 7EO to 20EO, 7PO to 20PO, 7BO to 20BO, more preferred 8EO to 10 EO, 8PO to 10PO, 8BO to 10BO and most preferred 8EO, 8PO, 8BO. The alkoxylation grade mentioned may be a whole number.

Preferred higher alkoxylated alcohols have a narrow homolog distribution (narrow range ethoxylates, NRE).

Further dispersing agents include alkoxylated long chain fatty acid amides where the fatty acid has 8-20 carbon atoms and the amide group is alkoxylated with 1-20 ethylene oxide, propylene oxide and/or butylene oxide units.

A further class of nonionic dispersing agents, which can be used in the aqueous dispersed coloring solution, is that of the alkyl polyglycosides (APG). Suitable alkyl polyglycosides satisfy the general Formula RO(G)z where R is a linear or branched, particularly 2-methyl-branched, saturated or unsaturated aliphatic radical containing 8 to 22 and preferably 12 to 18 carbon atoms and G stands for a glycose unit containing 5 or 6 carbon atoms, preferably glucose. The degree of oligomerization z is a number between 1.0 and 4.0 and preferably between 1.1 and 1.4.

Silicone containing nonionic dispersing agents, such as the ABIL B8852 or Silwet 7602, can also be used. An exemplary silicone-containing dispersing agent is silicone polybutane.

Examples of amine oxide dispersing agents include: dimethyldodecylamine oxide, dimethyltetradecylamine oxide; ethylmethyltetradecylamine oxide, cetyldimethylamine oxide, dimethylstearylamine oxide, cetylethylpropylamine oxide, diethyldodecylamine oxide, diethyltetradecylamine oxide, dipropyldodecylamine oxide, lauryl dimethyl amine oxide, bis- (2-hydroxyethyl) dodecylamine oxide, bis- (2-hydroxyethyl)-3-dodecoxy-1- hydroxypropyl amine oxide, (2-hydroxypropyl) methyltetradecylamine oxide, dimethyloleyamine oxide, dimethyl- (2-hydroxydodecyl) amine oxide, and the corresponding decyl, hexadecyl and octadecyl homologs of the above compounds.

Additional nitrogen-containing dispersing agents include ethoxylated primary alkyl amines where the alkyl group has 10-20 carbon atoms and the amine is ethoxylated with 2-20 ethylene oxide units.

Additionally, non-ionic dispersing agents derived from the condensation of ethylene oxide with the product resulting from the reaction of propylene oxide and ethylene diamine are also useful. For example, there are compounds containing from 40% to 80% of polyoxyethylene by weight and having a molecular weight from 5,000 to 11,000 resulting from the reaction of ethylene oxide groups with a hydrophobic base constituted of the reaction product from ethylene diamine and excess propylene oxide wherein the base has a molecular weight on order of 2,500-3, 000.

Suitable nonionic dispersing agents include the polyoxyethylene-polyoxypropylene condensates, which are sold by BASF under the trade name 'Pluronic', polyoxyethylene condensates of aliphatic alcohols/ethylene oxide condensates having from 1 to 30 moles of ethylene oxide per mole of coconut alcohol; ethoxylated long chain alcohols sold by Shell Chemical Co. under the trade name 'Neodol', polyoxyethylene condensates of sorbitan fatty acids, alkanolamides, such as the monoalkoanolamides, dialkanolamides and the ethoxylated alkanolamides, for example coconut monoethanolamide, lauric isopropanolamide and lauric diethanolamide; and amine oxides for example dodecyldimethylamine oxide.

Further exemplary non-ionic dispersing agents include alkylphenol alkoxylates, and amine oxides such as alkyl dimethylamine oxide or bis (2- hydroxyethyl) alkylamine oxide.

The additional nonionic dispersing agents can be provided in the aqueous dispersed coloring solutionin an amount of ≥ 0 wt.-% to ≤ 40 wt.-%, preferably ≥ 0.1 wt.-% to ≤ 35 wt.-%, further preferred ≥ 0.5 wt.-% to ≤ 32 wt.-%, and more preferred 1.0 wt.-% to 30 wt.-%, based on the weight of all components of the total composition.

It should be understood that the addition of a nonionic dispersing agent to the aqueous dispersed coloring solution can be omitted.

### Anionic Dispersing Agents

Exemplary anionic dispersing agents, also named nonionic tenside, that can be used include organic carboxylates, organic sulfonates, organic sulfates, organic phosphates and the like, particularly linear alkylaryl sulfonates, such as alkylarylcarboxylates, alkylarylsulfonates, alkylarylphosphates, and the like. These classes of anionic dispersing agents are known within as linear alkyl benzyl sulfonates (LABS), alpha olefin sulfonates (AOS), alkyl sulfates, and secondary alkane sulfonates.

The anionic dispersing agents can be provided in the aqueous dispersed coloring solutionin an amount of ≥ 0 wt.-% to ≤ 40 wt.-%, preferably ≥ 0.1 wt.-% to ≤ 35 wt.-%, further preferred ≥ 0.5 wt.-% to ≤ 32 wt.-%, and more preferred 1.0 wt.-% to 30 wt.-%, based on the weight of all components of the total composition.

It should be understood that the addition of an anionic dispersing agent to the aqueous dispersed coloring solution can be omitted.

### Cationic Dispersing Agents

In a preferred embodiment of the aqueous dispersed coloring solution comprises a cationic dispersing agent, also named cationic tenside.

Suitable cationic dispersing agents include quaternary ammonium compounds having the formula of RR'R" R‴N⁺X⁻, where R, R', R" and R‴ are each a C₁-C₂₄ alkyl, aryl or arylalkyl group that can optionally contain one or more P, O, S or N heteroatoms, and X is F, Cl, Br, I or an alkyl sulfate. Additional preferred cationic dispersing agents include ethoxylated and/or propoxylated alkyl amines, diamines, or triamines.

Each of R, R', R" and R‴ can independently include, individually or in combination, substituents including 6 to 24 carbon atoms, preferably 14 to 24 carbon atoms, and more preferably, 16 to 24 carbon atoms.

Each of R, R', R" and R‴ can independently be linear, cyclic, branched, saturated, or unsaturated, and can include heteroatoms such as oxygen, phosphorous, sulfur, or nitrogen. Any two of R, R', R" and R‴ can form a cyclic group. Any one of three of R, R', R" and R‴ can independently can be hydrogen. X is preferably a counter ion and preferably a non-fluoride counter ion. Exemplary counter ions include chloride, bromide, methosulfate, ethosulfate, sulfate, and phosphate.

In an embodiment, the quaternary ammonium compound includes alkyl ethoxylated and/or propoxylated quaternary ammonium salts (or amines).
Preferably, the alkyl group contains between about 6 and about 22 carbon atoms and can be saturated and/or unsaturated. The degree of alkoxylation is preferably between about 2 and about 20, and/or the degree of propoxylation is preferably between about 0 and about 30.
In an embodiment, the quaternary ammonium compound includes an alkyl group with about 6 to about 22 carbon atoms and a degree of alkoxylation between about 2 and about 20.

The cationic dispersing agents can be provided in the aqueous dispersed coloring solutionin an amount of ≥ 0 wt.-% to ≤ 40 wt.-%, preferably ≥ 0.1 wt.-% to ≤ 35 wt.-%, further preferred ≥ 0.5 wt.-% to ≤ 32 wt.-%, and more preferred 1.0 wt.-% to 30 wt.-%, based on the weight of all components of the total composition.

It should be understood that the addition of a cationic dispersing agent to the aqueous dispersed coloring solution can be omitted.

### Amphoteric Dispersing Agents

The aqueous dispersed coloring solution is preferably free of amphoteric dispersing agents.

Examples of suitable amphoteric dispersing agents include capryloamphopropionate, disodium lauryl B-iminodipropionate, and cocoamphocarboxypropionate, and disodium octylimino dipropionate.

The amphoteric dispersing agents can be provided in the composition in an amount of ≥ 0 wt.-% to ≤ 40 wt.-%, preferably ≥ 0.1 wt.-% to ≤ 35 wt.-%, further preferred ≥ 0.5 wt.-% to ≤ 32 wt.-%, and more preferred 1.0 wt.-% to 30 wt.-%, based on the weight of all components of the total composition.

It should be understood that the addition of an amphoteric dispersing agent to the aqueous dispersed coloring solution can be omitted.

### Solubilizer

The solubilizer is selected different to the dispersing agent and may be used in addition to the dispersing agent. The solubilizer is at least partially soluble at 23° C and may be selected from the group comprising a C₁ to C₆ alcohol, C₂ to C₂₀ organic acid, C₃ to C₆ ketone, C₃ to C₅ aldehyde, C₁ to C₆ alkyl, C₃ to C₆ ester, alkylene glycol alkyl ether, glycol alkyl ether,; preferably glycol and glycol oligomers, ethanol, acetone, formic or acetic acid, dimethylformamide or dimethylsulfoxide.

Furthermore, the solubilizer may be a compound according to the following formula R'-[(O(CH₂)ₘ)ₙ-]OH, wherein R' is an ethyl, propyl or butyl radical, m is 2, 3 or 4, and n is 1, 2 or 3, with the proviso that where R' is butyl m is 2 or 4. The solubilizer may be selected from the group consisting of ethylene glycol butyl ether, diethylene glycol ethylether, diethylene glycol butylether, propylene glycol propylether, dipropylene glycol propyl ether and tripropylene glycol propylether.

Furthermore, the solubilizer may be a compound according to the following formula H-[(O(CH₂)ₘ)ₙ-]OH, where m is 2, 3 or 4 and n is 1, 2, or 3. The solubilizer may be selected from the group consisting of diethylene glycol, triethylene glycol and 1,4 butanediol. Preferably the solubilizer forms a homogenous solution with water.

### Carrier agent

The carrier agent is selected different to the dispersing agent and the solubilizer and may be used in addition to the dispersing agent.

With respect to result of the coloring process it may be advantages when the aqueous dispersed coloring solution further comprises a carrier agent. According to an another embodiment the aqueous dispersed coloring solution may comprise in addition a carrier agent, wherein the carrier agent is preferably selected from the group comprising aromatic esters such as phthalic acid esters, , polyphenylether, phenoles, aromatic alcohols, aromatic ketones, aryl halides, such as halogenized benzene, halogenzide toluene; N-alkylphthalimide, methylnaphthaline, diphenyle, diphenylethere, naphtholether, and oxybiphenyle. Preferably the carrier agent does not form a homogenous solution with water. The carrier agent may decrease the time that is used for coloring and/or enhance the penetration capacity of the organic aromatic coloring agent.

### Temperature

It may be preferred that the temperature of the aqueous dispersed coloring solution is adjusted according to specific properties of the synthetic polar-polymer material. For example the temperature of the aqueous dispersed coloring solution exposed to the outer surface of the synthetic polar-polymer material may be adjusted such that the temperature of the aqueous dispersed coloring solution is higher or same than the glass-transition temperature T_{g} of the synthetic polar-component of the synthetic polar-polymer material to be colored; and/or the aqueous dispersed coloring solution exposing the synthetic polar-polymer material may have a temperature lower than the heat deflection temperature of the synthetic polar-polymer material to be colored. This may have the advantages that distortion or deforming of the synthetic polar-polymer material may be avoided.

The heat deflection temperature also called heat distortion temperature may be the temperature at which synthetic polar-polymer material deforms under a specified load. It may be determined by the following test procedure outlined in ASTM D648. The test specimen is loaded in three-point bending in the edgewise direction. The outer fiber stress used for testing is either 0.455 MPa or 1.82 MPa, and the temperature is increased at 2 °C/min until the specimen deflects 0.25 mm.

### Exposing the synthetic polar-polymer material to the aqueous dispersed coloring solution

As already mentioned, during the coloring process the outer surface of the synthetic polar-polymer material is exposed to the aqueous dispersed coloring solution. According to preferred embodiment the step of exposing the outer surface of the synthetic polar-polymer material to the aqueous dispersed coloring solution may comprises:
- dipping the outer surface of the synthetic polar-polymer material into the aqueous dispersed coloring solution; and/or
- flow coating the outer surface of the synthetic polar-polymer material with the aqueous dispersed coloring solution.

The specific way how the outer surface of the synthetic polar-polymer material is exposed to the aqueous dispersed coloring solution may be dependent on the article made of the synthetic polar-polymer material. For example if the article has the form of a bottle, the article may be dipped into the aqueous dispersed coloring solution in such a fashion that the inner surface of the bottle may not be exposed to the aqueous dispersed coloring solution. However, for other forms of the article made of the synthetic polar-polymer material it may be advantageous to flow coat the outer surface of the synthetic polar-polymer material with the aqueous dispersed coloring solution.

In order to achieve a homogenous coloring result and according to an another embodiment the step of exposing the outer surface of the synthetic polar-polymer material to the aqueous dispersed coloring solution may comprise
- stirring the aqueous dispersed coloring solution while the outer surface of the synthetic polar-polymer material is exposed to the aqueous dispersed coloring solution, and/or
- applying ultrasound to the aqueous dispersed coloring solution while the outer surface of the synthetic polar-polymer material is exposed to the aqueous dispersed coloring solution.

These method steps may increase and/or homogenize the migration of the organic aromatic coloring agent into the synthetic polar-polymer material.

Furthermore, the synthetic polar-polymer material, which is exposed to the aqueous dispersed coloring solution, may have a temperature in the range of about ≥ 40° C to about ≤ 150° C, preferably the synthetic polar-polymer material, which is exposed to the aqueous dispersed coloring solution, may have a temperature about ≥ 40° C and lower than the heat deflection temperature of the synthetic polar-polymer material. It may be preferably that the synthetic polar-polymer material may have a temperature that corresponds to the temperature of the aqueous dispersed coloring solution +/- 10 °C.

Therefore the temperature difference between the synthetic polar-polymer material and the aqueous dispersed coloring solution may not be higher than 10 °C. This may reduce unwanted effects in the synthetic polar-polymer material caused by a fast increase or decrease of the temperature.

Furthermore it may be preferable that the synthetic polar-polymer material may have a temperature lower than the heat deflection temperature of the synthetic polar-polymer material. Preferably the synthetic polar-polymer material does not deflect and/or deform when exposed to the conditions of the aqueous dispersed coloring solution.

It may be advantageous that the synthetic polar-polymer material may be partially cooled while being exposed to the aqueous dispersed coloring solution. For example if the synthetic polar-polymer material has the form of a bottle, the bottle may be dipped into the aqueous dispersed coloring solution in such a fashion that the inner surface of the bottle may not be exposed to the aqueous dispersed coloring solution. In this case the inner surface of the bottle may be cooled, while the outer surface of the bottle is exposed to the aqueous dispersed coloring solution.

It may be advantageous to expose the synthetic polar-polymer material to the aqueous dispersed coloring solution right after the synthetic polar-polymer material is formed in a manufacturing process. According to the above and to another preferred embodiment the synthetic polar-polymer material may be formed in a molding process, a compression molding process, an extruding process, a thermoforming process, a blowing process and/or a 3D-printing process, thereafter exposed to the aqueous dispersed coloring solution; preferably the synthetic polar-polymer material may be directly exposed, without cooling, to the aqueous dispersed coloring solution.

The synthetic polar-polymer material may be further formed in a compression molding, an injection molding, a rotational molding, an extrusion, an injection and/or extrusion blow molding, and/or casting process. The method of forming the synthetic polar-polymer material may not be critical to the method of reversibly and selectively coloring the synthetic polar-polymer material. Furthermore it may be possible that the synthetic polar-polymer material may be formed in another manufacturing process including all other manufacturing processes not explicitly listed here for the manufacturing of plastic parts.

### Time

According to an another embodiment the synthetic polar-polymer material, preferably at least one outer surface of the synthetic polar-polymer material, may be exposed to the aqueous dispersed coloring solution for about ≥ 1 second to about ≤ 60 minutes, preferably about ≥ 3 seconds to about ≤ 30 minutes, in addition preferred about ≥ 5 seconds to about ≤ 10 minutes, and also preferred about ≥ 10 seconds to about ≤ 1 minute, or about ≥ 15 seconds to about ≤ 30 seconds. However it is preferred that the synthetic polar-polymer material, preferably at least one outer surface of the synthetic polar-polymer material, may be exposed to the aqueous dispersed coloring solution for about ≥ 1 second to about < 10 minutes, preferably about ≥ 2 seconds to about ≤ 8 minutes, in addition preferred about ≥ 5 seconds to about ≤ 6 minutes, and also preferred about ≥ 10 seconds to about ≤ 4 minutes, or about ≥ 15 seconds to about ≤ 2 minutes.

In general the outer surface of a synthetic polar-polymer material is completely colored at about ≥ 1 second to about < 10 minutes, preferably about ≥ 2 seconds to about ≤ 8 minutes, in addition preferred about ≥ 5 seconds to about ≤ 6 minutes, and also preferred about ≥ 10 seconds to about ≤ 4 minutes, or about ≥ 15 seconds to about ≤ 2 minutes, that means the colorized surface of the synthetic polar-polymer material has a color defined by the organic aromatic coloring agent or mixtures thereof..

The synthetic polar-polymer material may be withdrawn at a specific rate from the aqueous dispersed coloring solution, including a rate sufficient to effect a coloring gradient. Therefore, the portion of the synthetic polar-polymer material that remains in the aqueous dispersed coloring solution longest may contain the most organic aromatic coloring agent per unit volume so that it exhibits the darkest color tint.

### Layer thickness to be colorized

The thickness of the layer that is colored may be about 1% to about 100% for a single layer, or about 0.1% to about 99% for a multilayer, regardless of the total thickness, or about 0.1 µm to about 1000 µm, or preferably about 1% to about 40%. The thickness of the layer that is completely colored may be about 1 µm to about 50 µm, more preferably about 5 µm to about 25 µm.

According to one embodiment the layer thickness of the synthetic polar-polymer material that is colorized by the method according to the present invention may be about ≥ 0.1 µm, preferably of about ≥ 1 µm to about ≤ 1000 µm, preferably the synthetic polar-polymer material is homogenously colored.

According to one embodiment the layer thickness of the synthetic polar-polymer material that is colorized by the method according to the present invention may be about ≥ 0.1 µm, preferably of about ≥ 1 µm to about ≤ 1000 µm, with a coloring grade of 0.1% to ≤ 100%, preferably ≥ 1 % to ≤ 90%.

It is not always the case that the additivated layer is completely colored. For a PET preform, the total thickness of the layer is may be about 3 mm, but the dye penetrates only about 2 µm to about 20 µm.

In furniture applications, the layer is 25% colorized of a thickness of 2mm, or the layer is 50% colorized of a thickness of 100µm. The thickness and % of colorization is depending on the article that is colorized by a method according to the invention.

Even with multilayer parts, with short dyeing times, it may happen that the dye does not penetrate the entire colorable layer, only the top layer of the part is colored, although the thickness of the additivated layer is significantly larger.

The layer thickness of the polar-polymer material that is colored by the process according to the invention may be about ≥ 1 µm to about ≤ 50 µm, preferably about ≥ 2 µm to about ≤ 30 µm, further preferred about ≥ 3 µm to about ≤ 20 µm, also preferred about ≥ 4 µm to about ≤ 15 µm, in addition preferred about ≥ 5 µm to about ≤ 12 µm and furthermore preferred about ≥ 6 µm to about ≤ 10 µm, wherein the colorized layer of the synthetic polar-polymer material has a color defined by the organic aromatic coloring agent or mixtures thereof used.

According to an another embodiment the synthetic polar-polymer material, preferably at least one outer surface of the synthetic polar-polymer material, may be exposed to the aqueous dispersed coloring solution for about ≥ 1 second to about ≤ 60 minutes, preferably about ≥ 3 seconds to about ≤ 30 minutes, in addition preferred about ≥ 5 seconds to about ≤ 10 minutes, and also preferred about ≥ 10 seconds to about ≤ 1 minute, or about ≥ 15 seconds to about ≤ 30 seconds; wherein the layer thickness of the polar-polymer material that is colored by the process according to the invention is about ≥ 1 µm to about ≤ 50 µm, preferably about ≥ 2 µm to about ≤ 30 µm, further preferred about ≥ 3 µm to about ≤ 20 µm, also preferred about ≥ 4 µm to about ≤ 15 µm, in addition preferred about ≥ 5 µm to about ≤ 12 µm and furthermore preferred about ≥ 6 µm to about ≤ 10 µm, wherein the colorized layer of the synthetic polar-polymer material has a color defined by the organic aromatic coloring agent or mixtures thereof used..

However it is preferred that the synthetic polar-polymer material, preferably at least one outer surface of the synthetic polar-polymer material, may be exposed to the aqueous dispersed coloring solution for about ≥ 1 second to about < 10 minutes, preferably about ≥ 2 seconds to about ≤ 8 minutes, in addition preferred about ≥ 5 seconds to about ≤ 6 minutes, and also preferred about ≥ 10 seconds to about ≤ 4 minutes, or about ≥ 15 seconds to about ≤ 2 minutes; wherein the layer thickness of the polar-polymer material that is colored by the process according to the invention is about ≥ 1 µm to about ≤ 50 µm, preferably about ≥ 2 µm to about ≤ 30 µm, further preferred about ≥ 3 µm to about ≤ 20 µm, also preferred about ≥ 4 µm to about ≤ 15 µm, in addition preferred about ≥ 5 µm to about ≤ 12 µm and furthermore preferred about ≥ 6 µm to about ≤ 10 µm, wherein the colorized layer of the synthetic polar-polymer material has a color defined by the organic aromatic coloring agent or mixtures thereof used..

### pH

The result of the coloring process may be influenced by the pH of the aqueous dispersed coloring solution. Preferably the aqueous dispersed coloring solution may have a pH in the acidic range. According to an another embodiment the aqueous dispersed coloring solution has a pH in the range of about ≥ 3.2 and about ≤ 6.5, preferably a pH in the range of about ≥ 3.4 and about ≤ 6; in addition preferred a pH in the range of about ≥ 3.5 and about ≤ 5.5 and also preferred a pH in the range of about ≥ 4 and about ≤ 5. It may be possible to reduce the pH of the aqueous dispersed coloring solution by adding acetic acid to the aqueous dispersed coloring solution.

### Surprising effect

It is surprising that the colorizing speed of the synthetic polar-polymer material can be significant increased by a pH < 7. The colorizing speed of the synthetic polar-polymer material seems to be highest at a pH range of the aqueous dispersed coloring solution of about ≥ 2.5 and about < 6, in particular at a pH range of about ≥ 3.5 and about < 5.

For example at a pH range of about ≥ 2.5 and about ≤ 6 of the aqueous dispersed coloring solution, the colorizing time for colorizing a layer thickness of the polar-polymer material that is colored by the process according to the invention can be of about ≥ 1 µm to about ≤ 50 µm, preferably about ≥ 2 µm to about ≤ 30 µm, further preferred about ≥ 3 µm to about ≤ 20 µm, also preferred about ≥ 4 µm to about ≤ 15 µm, in addition preferred about ≥ 5 µm to about ≤ 12 µm and furthermore preferred about ≥ 6 µm to about ≤ 10 µm, is < 10 minutes, preferably about ≥ 2 seconds to about ≤ 8 minutes, in addition preferred about ≥ 5 seconds to about ≤ 6 minutes, and also preferred about ≥ 10 seconds to about ≤ 4 minutes, or about ≥ 15 seconds to about ≤ 2 minutes.

In other words, the coloring process is rather fast. By changing the duration of the exposure the migration depth of the migration of the organic aromatic coloring agent into the synthetic polar-polymer material and/or the concentration of the organic aromatic coloring agent in the synthetic polar-polymer material may be varied. Therefore, the color appearance of the colored synthetic polar-polymer material may also vary according to the duration of exposure. For example the color of a colored synthetic polar-polymer material that has been exposed to the aqueous dispersed coloring solution for < 10 minutes may be more intense than the color of a colored synthetic polar-polymer material that has been exposed to the aqueous dispersed coloring solution for ≤ 5 minutes.

### Embodiments

In another preferred embodiment the aqueous dispersed coloring solution may comprise:
- about ≥ 0.1 wt.-% to about ≤ 15 wt.-% at least one organic aromatic coloring agent having a molecular weight Mw in the range of about ≥ 250 g/mol to about ≤ 550 g/mol;
- about ≥ 0.01 wt.-% to about ≤ 10 wt.-% one dispersing agent for dispersing the organic aromatic coloring agent in the aqueous solution,
- about ≥ 0 wt.-% to about ≤ 50 wt.-% of least one solubilizer, and
- water added to 100 wt.-%.

In another preferred embodiment the aqueous dispersed coloring solution may comprise:
- about ≥ 0.1 wt.-% to about ≤ 15 wt.-% at least one organic aromatic coloring agent having a molecular weight Mw in the range of about ≥ 250 g/mol to about ≤ 550 g/mol;
- about ≥ 0.01 wt.-% to about ≤ 10 wt.-% one dispersing agent for dispersing the organic aromatic coloring agent in the aqueous solution,
- about ≥ 0 wt.-% to about ≤ 50 wt.-% of least one solubilizer,
- about ≥ 0.05 wt.-% to about ≤ 5 wt.-% of at least one carrier agent, and
- water added to 100 wt.-%.

### Multiple layer

The polar-polymer material can comprise at least one or more layers. For example the polar-polymer material can comprises a multi-layer. The layers may be differently composed. One layer of the polymer material may have a content of polar components and non-polar polymers, wherein the content of the polar components are less than about 5 wt.-%, preferably about < 3 wt.-%, further preferred about ≤ 2 wt.-% and in addition preferred about < 0.5 wt.-% or about < 0.1 wt.-% and about ≥ 90 wt.-%, preferably about ≥ 95 wt.-%, more preferably preferably about ≥ 99.5 wt.-% of non-polar components, such as non-polar polymer and/or non-polar oligomer cannot be colorized by the method according to the present invention.

The advantage is that a two layer polar-polymer material, such as a bottle, wherein the outer surface directed outwards is of a polar-polymer material comprises about ≥ 0.5 wt.-%, preferably about ≥ 5 wt.-%, more preferably ≥ 10 wt.-%, of polar components, such as synthetic polar polymer, synthetic polar oligomer and/or polar additive, can be colored by the method according to the invention, where else the inner layer facing to the inside of the bottle, which is a layer comprising less than about 5 wt.-%, preferably about < 3 wt.-%, further preferred about < 2 wt.-% and in addition preferred about < 1 wt.-%, and more preferably < 0.5 wt.-%, or about ≥ 0 to < 0.1 wt.-% of a polar component and about ≥ 90 wt.-%, preferably about ≥ 95 wt.-%, more preferably about ≥ 99.5 wt.-% to about < 100 wt.-% of non-polar components, such as non-polar polymer and/or non-polar oligomer, cannot be colorized by the method according to the present invention.

Therefore it is possible to color for example a multilayer package, wherein only the outer layer is colored. Thus the inner layer, that is supposed to be in contact to the filling of the package may be free of the organic aromatic coloring agent.

According to an embodiment a synthetic polar-polymer material may comprises at least two layers, wherein at least a first layer is of a polar-polymer material, that comprises about ≥ 0.5 wt.-%, further ≥ 5 wt.-%, preferably ≥ 10 wt.-%, of polar components, such as synthetic polar polymer, synthetic polar oligomer and/or polar additive, and is colorizable, where else the second layer comprising less than about 5 wt.-%, preferably about < 3 wt.-%, further preferred about < 2 wt.-% and in addition preferred about < 1 wt.-%, more preferably less than 0.5 wt.-% or about ≥ 0 to < 0.1 wt.-% of a polar component and about ≥ 90 wt.-%, preferably about ≥ 95 wt.-% to about ≤ 100 wt.-% of at least one non-polar component, such as non-polar polymer and/or non-polar oligomer, cannot be colorized.

This is very useful for containers where the inner surface comes into contact with foodstuffs, such as beverages, fruits or there like, because the inner non-polar surface of that container is not colored by the method according to the invention so that the foodstuff cannot be contaminated by the coloring agent of the outer polar surface layer.

### Article that can be colorized

According to an another embodiment the article may be selected from the group comprising a sheet, a foil, a tube, a container, a part, a bottle, a non-woven fabric, and preferably the article may be selected from the group comprising computer face-plates, keyboards, bezels and cellular phones, color coded packaging and containers of all types, including ones for industrial components, residential and commercial lighting fixtures and components therefor, such as sheets, used in building and in construction, tableware, including plates, cups and eating utensils, small appliances and their components, optical and sun-wear lenses, as well as decorative films including such films that are intended for use in film insert molding. Preferably the article may not be selected from the group comprising a fiber, a woven fabric, and a knitted fabric.

### Further advantages

With regard to further advantages and technical features of the method for reversible and selective coloring the synthetic polar-polymer material it is referred to the colored synthetic polar-polymer material, to the article comprising at least one colored synthetic polar-polymer material, the examples and the further description.

The present invention further relates to the colored synthetic polar-polymer material, wherein the synthetic polar-polymer material, preferably the outer surface of the synthetic polar-polymer material, is colored by the above described method. This is not only an easy way for coloring a synthetic polar-polymer material but allows also for decoloring of the colored synthetic polar-polymer material.

According to another preferred embodiment the colored synthetic polar-polymer material may comprise at least one synthetic polar-component layer and at least one non-polar-component layer, wherein at least one layer or outer surface of the synthetic polar-component layer is colored by the above described method, wherein the non-polar-component layer is not colorable by the above described method. In other words the colored synthetic polar-polymer material may have a layered structure, comprising the synthetic polar-component layer and the non-polar-component layer. Only the synthetic polar-component layer may be colorable with the above described method but not the non-polar-component layer. Therefore, by adjusting the polarity of the different layers it may be possible to selectively color the desired layers while the other layers remain colorless.

As described above the coloring process is based on migration of the organic aromatic coloring agent into the synthetic polar-polymer material. By exposing the outer surface of the synthetic polar-polymer material to the aqueous dispersed coloring solution, the outer layer of the synthetic polar-polymer material gets colored. According to the above a colored synthetic polar-polymer material may be provided, wherein at least a layer thickness of about ≥ 0.1 µm of an outer layer of the colored synthetic polar-polymer material is homogenous colored. Homogeneous coloration of the outer layer of the synthetic polar-polymer material may be achieved by having the same amount of the organic aromatic coloring agent per area of the outer surface of the synthetic polar-polymer material. The organic aromatic coloring agent may be essentially homogenously distributed in the colored part or layer of the synthetic polar-polymer material, meaning that that for the eye of a human being the colored outer surface or the colored part or the colored layer of the synthetic polar-polymer material appear uniformly colored without color variations. The outer surface may be homogenously colored by migration of the organic aromatic coloring agent into the synthetic polar-polymer material up to certain migration depth. A migration depth further into the synthetic polar-polymer material may only further increase the opacity, darkness, and/or color depth of the color but not the homogeneity of the colored surface. The colored surface may be homogenously colored when no significant color fluctuations may be visible by the human eye. For a homogenously colored surface the color differences, given in ΔE*_{ab}, according to the International Commission on Illumination (CIE), over the outer surface of the colored synthetic polar-polymer material may be about ≤ 2.

According to an another embodiment the concentration of the organic aromatic coloring agent in at least one colored layer of the synthetic polar-polymer material, colored by the above described method, wherein the colored layer has a thickness of about ≥ 0.1 µm, may be 0.00001 wt.-% to about ≤ 5 wt.-%, based on the total weight of said colored layer.

With regard to further advantages and technical features of the colored synthetic polar-polymer material it is referred to the method for reversible and selective coloring the synthetic polar-polymer material, the article comprising at least one colored synthetic polar-polymer material, the examples and the further description.

The present invention further relates to an article comprising at least one colored synthetic polar-polymer material as described above and colored by the method as described above. By using the above described method for reversible and selectively coloring an article may be provided having the advantages that the article may be decolored.

With regard to further advantages and technical features of the article it is referred to the method for reversible and selective coloring the synthetic polar-polymer material, the colored synthetic polar-polymer material, examples and the further description.

To summarize the above, the present invention solves an important object how to design a coloring process to be environmentally friendly.

Other example embodiments will be described in the following with reference to the examples. It has to be noted that the examples are only provided for illustration of the general concept by examples not defining the scope of protection of the invention. The examples are not drawn to scale. Features shall not be considered to be essential for the present invention because they are depicted in the examples.

### DETAILED DESCRIPTION OF THE EXAMPLES

The invention will be described in the following with reference to exemplary examples 1 to 10.

### Example 1

A polar polymer material layer of a blend of 95 wt.-% HDPE (MFI 20) and 5 wt.-% of poly ε-Caprolactone (MFI 2-4 and MW about 80.000) with a length of 10 cm, height of 1 cm and width of 1 cm is placed in 800 ml of an aqueous coloring solution, wherein the aqueous coloring solution comprises 8 g of an organic aromatic coloring agent having formula A5: 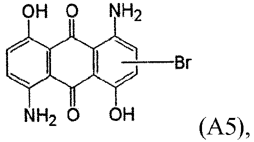 a dispersing agent of 3 g Efka^{®} 4300 (acrylic block-copolymer) obtainable by BASF SE and 200 ml of a solubilizer of ethanol, wherein the aqueous coloring solution contacting the polar polymer material has a temperature of 80° C. The polar polymer material layer is exposed to the aqueous coloring solution for about 8 minutes at a pH of 2.9. Thereafter the polar polymer material layer is removed from the aqueous coloring solution and the colored polar polymer material layer is rinsed with water of 30° C at least 3 times to remove color residuals.

The homogenous penetration depth of the organic aromatic coloring agent (formula A5) in the polar polymer material layer is at least 5 µm and the RGB: 98/145/220

### Example 2

A polar polymer material layer of a blend of 95 wt.-% HDPE (MFI 20) and 5 wt.-% of poly ε-Caprolactone (MFI 2-4 and MW about 80.000) with a length of 10 cm, height of 1 cm and width of 1 cm is placed in 800 ml of an aqueous coloring solution, wherein the aqueous coloring solution comprises 8 g of an organic aromatic coloring agent having formula A5: 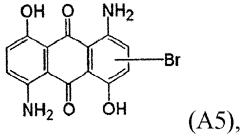 a dispersing agent of 2 g Efka^{®} 4300 (acrylic block-copolymer) obtainable by BASF SE and 200 ml of a solubilizer of 1-methoxy-2-propyl acetate, wherein the aqueous coloring solution contacting the polar polymer material has a temperature of 85° C at a pH of 3.2. The polar polymer material layer is exposed to the aqueous coloring solution for about 7 minutes. Thereafter the polar polymer material layer is removed from the aqueous coloring solution and the colored polar polymer material layer is rinsed with water of 30° C at least 3 times to remove color residuals.

The homogenous penetration dept. of the organic aromatic coloring agent (formula A5) in the polar polymer material layer is at least 6 µm and the RGB: 84/132/206

### Example 3

A polar polymer material layer of a blend of 95 wt.-% HDPE (MFI 20) and 5 wt.-% of poly ε-Caprolactone (MFI 2-4 and MW about 80.000) with a length of 10 cm, height of 1 cm and width of 1 cm is placed in 800 ml of an aqueous coloring solution, wherein the aqueous coloring solution comprises 8 g of an organic aromatic coloring agent having formula A5: 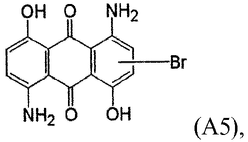 a dispersing agent of 2 g Efka^{®} PU 4050 (is a modified polyurethane) obtainable by BASF SE and 200 ml of a solubilizer of ethanol, wherein the aqueous coloring solution contacting the polar polymer material has a temperature of 90 C. The polar polymer material layer is exposed to the aqueous coloring solution for about 6 minutes at a pH of 3.9. Thereafter the polar polymer material layer is removed from the aqueous coloring solution and the colored polar polymer material layer is rinsed with water of 30° C at least 3 times to remove color residuals.

The homogenous penetration depth of the organic aromatic coloring agent (formula A5) in the polar polymer material layer is at least 8 µm and the RGB: 0/76/143.

### Example 4

A polar polymer material layer of 95 wt.-% HDPE (MFI 20) and 5 wt.-% of poly ε-Caprolactone (MFI 2-4 and MW about 80.000) with a length of 10 cm, height of 1 cm and width of 1 cm is placed in 800 ml of an aqueous coloring solution, wherein the aqueous coloring solution comprises 8 g of an organic aromatic coloring agent having formula A5: 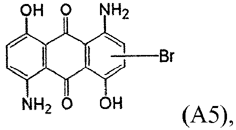 a dispersing agent of 2 g Efka^{®} PU 4050 (is a modified polyurethane) obtainable by BASF SE and 200 ml of a solubilizer of 1-methoxy-2-propyl acetate, wherein the aqueous coloring solution contacting the polar polymer material has a temperature of 95 C. The polar polymer material layer is exposed to the aqueous coloring solution for about 8 minutes at a pH of 3.5. Thereafter the polar polymer material layer is removed from the aqueous coloring solution and the colored polar polymer material layer is rinsed with water of 30° C at least 3 times to remove color residuals.

The homogenous penetration depth of the organic aromatic coloring agent (formula A5) in the polar polymer material layer is at least 10 µm and the RGB: 0/30/87.

### Example 5

A polar polymer material layer of a blend of 95 wt.-% HDPE (MFI 20) and 5 wt.-% of poly ε-Caprolactone (MFI 2-4 and MW about 80.000) with a length of 10 cm, height of 1 cm and width of 1 cm is placed in 800 ml of an aqueous coloring solution, wherein the aqueous coloring solution comprises 8 g of an organic aromatic coloring agent having formula A1: 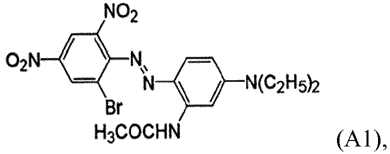 a dispersing agent of 3 g Efka^{®} 4300 (acrylic block-copolymer) obtainable by BASF SE and 200 ml of a solubilizer of ethanol, wherein the aqueous coloring solution contacting the polar polymer material has a temperature of 90° C. The polar polymer material layer is exposed to the aqueous coloring solution for about 5 minutes at a pH of 3.5. Thereafter the polar polymer material layer is removed from the aqueous coloring solution and the colored polar polymer material layer is rinsed with water of 30° C at least 3 times to remove color residuals.

The homogenous penetration depth of the organic aromatic coloring agent (formula A1) in the polar polymer material layer is at least 5 µm and the RGB: 157/174/182

### Example 6

A polar polymer material layer of a blend of 95 wt.-% HDPE (MFI 20) and 5 wt.-% of poly ε-Caprolactone (MFI 2-4 and MW about 80.000) with a length of 10 cm, height of 1 cm and width of 1 cm is placed in 800 ml of an aqueous coloring solution, wherein the aqueous coloring solution comprises 8 g of an organic aromatic coloring agent having formula A2: 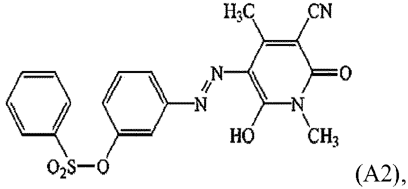 a dispersing agent of 2g Efka^{®} 4300 (acrylic block-copolymer) obtainable by BASF SE and 200 ml of a solubilizer of 1-methoxy-2-propyl acetate, wherein the aqueous coloring solution contacting the polar polymer material has a temperature of 100° C at a pH of 4.2. The polar polymer material layer is exposed to the aqueous coloring solution for about 9 minutes. Thereafter the polar polymer material layer is removed from the aqueous coloring solution and the colored polar polymer material layer is rinsed with water of 30° C at least 3 times to remove color residuals.

The homogenous penetration depth of the organic aromatic coloring agent (formula A2) in the polar polymer material layer is at least 5 µm and the RGB: 255/254/0

### Example 7

A polar polymer material layer of a blend of 95 wt.-% HDPE (MFI 20) and 5 wt.-% of poly ε-Caprolactone (MFI 2-4 and MW about 80.000) with a length of 10 cm, height of 1 cm and width of 1 cm is placed in 800 ml of an aqueous coloring solution, wherein the aqueous coloring solution comprises 8 g of an organic aromatic coloring agent having formula A3: 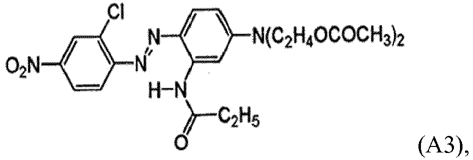 a dispersing agent of 2g Efka^{®} PU 4050 (is a modified polyurethane) obtainable by BASF SE and 200 ml of a solubilizer of ethanol, wherein the aqueous coloring solution contacting the polar polymer material has a temperature of 80° C. The polar polymer material layer is exposed to the aqueous coloring solution for about 6 minutes at a pH of 3.8. Thereafter the polar polymer material layer is removed from the aqueous coloring solution and the colored polar polymer material layer is rinsed with water of 30° C at least 3 times to remove color residuals.

The homogenous penetration depth of the organic aromatic coloring agent (formula A3) in the polar polymer material layer is at least 3 µm and the RGB: 255/182/215

### Example 8

A polar polymer material layer of 95 wt.-% HDPE (MFI 20) and 5 wt.-% of poly ε-Caprolactone (MFI 2-4 and MW about 80.000) with a length of 10 cm, height of 1 cm and width of 1 cm is placed in 800 ml of an aqueous coloring solution, wherein the aqueous coloring solution comprises 8 g of an organic aromatic coloring agent having formula A10: 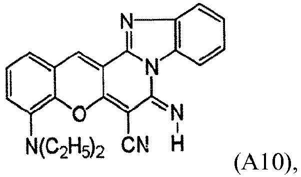 a dispersing agent of 2 g Efka^{®} PU 4050 (is a modified polyurethane) obtainable by BASF SE and 200 ml of a solubilizer of 1-methoxy-2-propyl acetate, wherein the aqueous coloring solution contacting the polar polymer material has a temperature of 80° C. The polar polymer material layer is exposed to the aqueous coloring solution for about 5 minutes at a pH of 6.5. Thereafter the polar polymer material layer is removed from the aqueous coloring solution and the colored polar polymer material layer is rinsed with water of 30° C at least 3 times to remove color residuals.

The homogenous penetration depth of the organic aromatic coloring agent (formula A10) in the polar polymer material layer is at least 10 µm and the RGB: 255/56/76

### Example 9

A polar polymer material layer of a blend of 95 wt.-% HDPE (MFI 20) and 5 wt.-% of poly ε-Caprolactone (MFI 2-4 and MW about 80.000) with a length of 10 cm, height of 1 cm and width of 1 cm is placed in 800 ml of an aqueous coloring solution, wherein the aqueous coloring solution comprises 8 g of an organic aromatic coloring agent having formula A5: 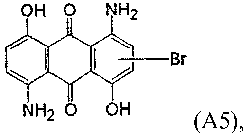 a dispersing agent of 3 g Efka^{®} 4300 (acrylic block-copolymer) obtainable by BASF SE, wherein the aqueous coloring solution contacting the polar polymer material has a temperature of 80° C. The polar polymer material layer is exposed to the aqueous coloring solution for about 9 minutes at a pH of 2.9. Thereafter the polar polymer material layer is removed from the aqueous coloring solution and the colored polar polymer material layer is rinsed with water of 30° C at least 3 times to remove color residuals.

The homogenous penetration depth of the organic aromatic coloring agent (formula A5) in the polar polymer material layer is at least 5 µm and the RGB: 98/145/220

### Example 10

An article comprising two layers, wherein the first layer is a polar polymer material of a blend of 95 wt.-% HDPE (MFI 20) and 5 wt.-% of poly ε-Caprolactone (MFI 2-4 and MW about 80.000) and the second layer is a non-polar component layer comprising 100 wt.-% HDPE (MFI 20). The article which has a length of 10 cm, height of 1 cm and width of 1 cm is placed in 800 ml of an aqueous coloring solution, wherein the aqueous coloring solution comprises 8 g of an organic aromatic coloring agent having formula A1: 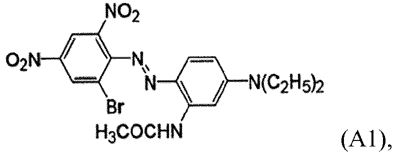 a dispersing agent of 3 g Efka^{®} 4300 (acrylic block-copolymer) obtainable by BASF SE and 200 ml of a solubilizer of ethanol, wherein the aqueous displersed coloring solution contacts the first layer and the second layer and has a temperature of 90° C. The article is exposed to the aqueous dispersed coloring solution for about 5 minutes at a pH of 3.5. Thereafter the article is removed from the aqueous dispersed coloring solution and the article is rinsed with water of 30° C at least 3 times to remove color residuals. The first layer, i.e. the polar polymer material layer is colored wherein the second layer i.e. the non-polar component layer is not colored. The homogenous penetration depth of the organic aromatic coloring agent (formula A1) in the first layer is at least 5 µm and the RGB: 157/174/182

The order of presented actions or steps is not mandatory; alternative orders are possible. It is to be understood that the described embodiments are examples only, which may be modified and/or supplemented in many ways within the scope of the claims. In particular, any feature described for a particular embodiment can be used by itself or in combination with other features in any other embodiment. Each feature that has been described for an embodiment of a particular category can also be used in an equivalent manner in an embodiment of any other category.

## Claims

1. Method for reversible and selective coloring a synthetic polar-polymer material comprising the step:
exposing the outer surface of the synthetic polar-polymer material to an aqueous dispersed coloring solution, wherein
the aqueous dispersed coloring solution comprises:
- at least one organic aromatic coloring agent having a molecular weight Mw in the range of ≥ 250 g/mol to ≤ 550 g/mol, and wherein the organic aromatic coloring agent is not a chemical reactive dye, and wherein the coloring agent comprises at least 2 to 6 aromatic six-membered rings and comprises at least one heteroatom selected from N, O, S, halogens,
- at least one dispersing agent for dispersing the organic aromatic coloring agent in the aqueous solution, and
- optionally at least one solubilizer,
wherein the aqueous dispersed coloring solution exposing the synthetic polymer material has a temperature in the range of ≥ 30°C to ≤ 150 °C and optionally a pH in the range of ≥ 2.5 and < 7, and wherein the dispersing agent is selected different from the solubilizer.

2. The method according to claim 1, wherein the synthetic polar-polymer material that is colored comprises at least one synthetic polar-component, wherein the synthetic polar-component comprises
- at least one synthetic polar-polymer having a Mw ≥ 1000 g/mol; or
- at least one composition of a non-polar-polymer having a Mw ≥ 1000 g/mol containing
- at least one synthetic polar-polymer having a Mw ≥ 1000 g/mol, and/or
- at least one synthetic polar-oligomer having a Mw ≥ 600 g/mol and < 1000 g/mol, and/or
- at least one polar-additive having a Mw ≥ 70 and < 600 g/mol, wherein the polar-additive is selected different to the organic aromatic coloring agent having a molecular weight Mw in the range of ≥ 250 g/mol to ≤ 550 g/mol and is not a dye.

3. The method according to claim 2, wherein the synthetic polar-polymer having a Mw ≥ 1000 g/mol, the synthetic polar-oligomer having a Mw ≥ 600 g/mol and < 1000 g/mol, and the polar-additive having a Mw ≥ 70 and < 600 g/mol each comprises at least ≥ 5 wt.-% of heteroatoms, wherein the weight % is calculated based on the individual weights of the synthetic polar-polymer, the synthetic polar-oligomer, and the polar-additive.

4. The method according to claim 2 or 3, wherein the synthetic polar-polymer material that is colored comprises at least ≥ 0.5 wt.-% of the synthetic polar-component, preferably ≥ 5 wt.-% of the synthetic polar-component, and further preferred ≥ 10 wt.-% of the synthetic polar-component, in addition preferred ≥ 15 wt.-% of the synthetic polar-component, also preferred ≥ 20 wt.-% of the synthetic polar-component, or ≥ 30 wt.-% and ≤ 100 wt.-% of the synthetic polar-component, wherein the weight % is calculated based on the total weight of the synthetic polar-polymer material.

5. The method according to claims 1 to 4, wherein
a) the synthetic polar-polymer comprises an amorphous phase of at least ≥ 10 vol.-%, preferably ≥ 30 vol.-%, more preferably ≥ 50 vol.-% and ≤ 100 vol.-%, wherein the volume % is calculated on the total volume of the synthetic polar-polymer; and/or
b) the synthetic polar-oligomer comprises an amorphous phase of at least ≥ 10 vol.-%, preferably ≥ 30 vol.-%, more preferably ≥ 50 vol.-% and ≤ 100 vol.-%, wherein the volume % is calculated on the total volume of the synthetic polar-oligomer.

6. The method according to any of claims 1 to 5, wherein
a) the synthetic polar-polymer has, above the glass-transition temperature Tg, a free volume, in the range of ≥ 1 vol.-% to 25 %, preferably ≥ 2 % to ≤ 20 %, further preferred ≥ 2.2 % to ≤ 15 %, based on the total volume of the synthetic polar-polymer material; and/or
b) the synthetic polar-oligomer has, above the glass-transition temperature Tg, a free volume in the range of ≥ 1 % to 25 %, preferably ≥ 2 % to ≤ 20 %, further preferred ≥ 2.2 % to ≤ 15 %, based on the total volume of the synthetic polar-oligomer material.

7. The method according to any of claims 1 to 6, wherein the glass-transition temperature Tg of the synthetic polar-polymer is in the range of ≥ -75°C to ≤ 160°C, preferably ≥ -50°C to ≤ 120°C, further preferred ≥ 0°C to ≤ 115°C.

8. The method according to any of claims 1 to 7, wherein
a) the synthetic polar-polymer is selected from the group comprising synthetic polar-homopolymers, synthetic polar-copolymers, and/or synthetic polar-terpolymers; and/or
b) the synthetic polar-oligomer is selected from the group comprising synthetic polar-homo oligomers, synthetic polar-cooligomers, and/or synthetic polar-teroligomers.

9. The method according to any of the preceding claims 1 to 8, wherein, wherein the polar-additive having a Mw ≥ 70 and < 600 g/mol is selected from the group comprising aliphatic acids CH₃-[CH₂]ₙ-COOH acids (n ≥ 3), amino acids, carboxylic acid amide, hydroxyl acids, fatty acids, aliphatic or aliphatic/aromatic aldehydes and ketones, esters, pentaerythritol, pentaerythritol ester preferably carboxylic acid ester, benzoic acid esters comprising benzylbenzoat or phenylbenzoat, phenylether, alcohols and polyvalent alcohols, preferably glycerine, amines, wherein the polar-additive is selected different to the organic aromatic coloring agent having a molecular weight Mw in the range of ≥ 250 g/mol to ≤ 550 g/mol; and preferably the polar-additive having a Mw ≥ 100 and < 600 g/mol is containing a heteroatom selected from N, O, S and/or halogene.

10. The method according to any of the preceding claims 2 to 9, wherein the non-polar-polymer is selected from the group of polyalkylene polymers, polyalkylene copolymers, polyakylene block copolymers; the non-polar-polymer is preferably selected from of polymeric aliphatic or aromatic hydrocarbons, preferably polyalkylene polymers, polyalkylene co- and terpolymer with random or block-structure; and more preferred from polyethylen (PE), polypropylene (PP), polybutene (PB), polystyrene, polyisobutylene, polybutadiene, polyisoprene.

11. The method according to any of the preceding claims 1 to 10, wherein the organic aromatic coloring agent has a molecular weight Mw in the range of ≥ 250 g/mol to ≤ 550 g/mol, preferably the organic aromatic coloring agent has a molecular weight Mw in the range of ≥ 270 g/mol to ≤ 450 g/mol, and more preferably the organic aromatic coloring agent has a molecular weight Mw in the range of ≥ 285 g/mol to ≤ 400 g/mol.

12. The method according to any of the preceding claims1 to 11, wherein the organic aromatic coloring agent has a solubility in water at 23 °C of ≤ 0.1 g/l and > 0 g/l, preferably ≤ 0.01 g/l and > 0 g/l, more preferably ≤ 0.001 g/l and > 0 g/l.

13. The method according to any of the preceding claims1 to 12, wherein the organic aromatic coloring agent comprises at least 3 to 5 aromatic six-membered rings and at least 1 to 4 five-membered rings, or having at least 2 to 6 aromatic six-membered rings; and/or wherein the organic aromatic coloring agent comprises at least on heteroatom selected from N, O, S, halogens.

14. The method according to any of the preceding claims1 to 13, wherein the dispersing agent is selected from the group comprising at least one:
- anionic tenside, preferably selected from polyphosphates, polyacrylates, aromatic sulfonates, esters with ethoxylate groups, esters with sulfonate groups, fatty acid-based polymers with an anionic group, salts of polycarboxylic acids, ethoxylates, thiourea dioxide;
- cationic tenside, preferably selected from quaternary ammonium compounds, fatty acid-polymers with a cationic group per molecule;
- non-ionic tenside, preferably selected from aromatic esters and hydrocarbons, aromatic and non-aromatic carboxylic acid esters, ethyl acrylate, fatty acid esters, ethoxylated fatty acid, polymers that are fatty acid-based with a non-ionic group per molecule, acrylate-copolymers, acrylate/styrene copolymers, fatty acid derivatives, polyalkoxylate;
- polyurethane (PUR) polymers and/or polyacrylate polymers, preferably linear or branched polyurethane (PUR) polymers and/or polyacrylate polymers, more preferred the polyurethane (PUR) polymer and/or polyacrylate polymer have a MW of 5000 to 30000 g/mol.

15. The method according to any of the preceding claims 1 to 14, wherein the solubilizer is soluble at 23° C and selected from the group comprising a C₁ to C₆ alcohol, C₂ to C₂₀ organic acid, C₃ to C₆ ketone, C₃ to C₅ aldehyde, C₁ to C₆ alkyl, C₃ to C₆ ester, alkylene glycol alkyl ether, glycol alkyl ether,; preferably glycol and glycol oligomers, ethanol, acetone, formic or acetic acid, dimethylformamide or dimethylsulfoxide.

16. The method according to any of the preceding claims 1 to 15, wherein the aqueous dispersed coloring solution comprises in addition a carrier agent, wherein the carrier agent is preferably selected from the group comprising aromatic esters such as phthalic acid esters, polyphenylether, phenoles, aromatic alcohols, aromatic ketones, aryl halides, such as halogenized benzene, halogenized toluene; N-alkylphthalimide, methylnaphthaline, diphenyle, diphenylethere, naphtholether, and oxybiphenyle.

17. The method according to any of the previous claims 1 to 16, wherein the step of exposing the outer surface of the synthetic polar-polymer material to an aqueous dispersed coloring solution comprises:
- dipping the outer surface of the synthetic polar-polymer material into the aqueous dispersed coloring solution; and/or
- flow coating the outer surface of the synthetic polar-polymer material with the aqueous dispersed coloring solution.

18. The method according to any of the previous claims 1 to 17, wherein the step of exposing the outer surface of the synthetic polar-polymer material to an aqueous dispersed coloring solution comprises,
- stirring the aqueous dispersed coloring solution while the outer surface of the synthetic polar-polymer material is exposed to the aqueous dispersed coloring solution, and/or
- applying ultrasound to the aqueous dispersed coloring solution while the outer surface of the synthetic polar-polymer material is exposed to the aqueous dispersed coloring solution.

19. The method according to any of the preceding claims 1 to 18, wherein the synthetic polar-polymer material is formed in a molding process, a compression molding process, an extruding process, a thermoforming process, a blowing process and/or a 3D-printing process, thereafter exposed to the aqueous dispersed coloring solution; preferably the synthetic polar-polymer material is directly exposed, without cooling, to the aqueous dispersed coloring solution with the remaining heat from the molding process, the compression molding process, the extruding process, the thermoforming process, the blowing process and/or the 3D-printing process.

20. The method according to any of the preceding claims1 to 19, wherein the synthetic polar-polymer material, preferably at least one outer surface of the synthetic polar-polymer material, is exposed to the aqueous dispersed coloring solution for ≥ 1 second to ≤ 60 minutes, preferably ≥ 3 seconds to ≤ 30 minutes, in addition preferred ≥ 5 seconds to ≤ 10 minutes, and also preferred ≥ 10 seconds to ≤ 1 minute, or ≥ 15 seconds to ≤ 30 seconds.

21. The method according to any of the preceding claims 1 to 20, wherein the aqueous dispersed coloring solution comprises:
- ≥ 0.1 wt.-% to ≤ 15 wt.-% at least one organic aromatic coloring agent having a molecular weight Mw in the range of ≥ 250 g/mol to ≤ 550 g/mol;
- ≥ 0.01 wt.-% to ≤ 10 wt.-% one dispersing agent for dispersing the organic aromatic coloring agent in the aqueous solution,
- ≥ 0 wt.-% to ≤ 50 wt.-% of least one solubilizer, and
- water added to 100 wt.-%.

22. The method according to any of the preceding claims 1 to 21, wherein the aqueous dispersed coloring solution comprises:
- ≥ 0.1 wt.-% to ≤ 15 wt.-% at least one organic aromatic coloring agent having a molecular weight Mw in the range of ≥ 250 g/mol to ≤ 550 g/mol;
- ≥ 0.01 wt. -% to ≤ 10 wt.-% one dispersing agent for dispersing the organic aromatic coloring agent in the aqueous solution,
- ≥ 0 wt.-% to ≤ 50 wt.-% of least one solubilizer,
- ≥ 0.05 wt.-% to ≤ 5 wt.-% of at least one carrier agent, and
- water added to 100 wt.-%.

23. The method according to any of the preceding claims 1 to 22, wherein the aqueous dispersed coloring solution has a pH in the range of ≥ 3.2 and ≤ 6.5, preferably a pH in the range of ≥ 3.4 and ≤ 6; in addition preferred a pH in the range of ≥ 3.5 and ≤ 5.5 and also preferred a pH in the range of ≥ 4 and ≤ 5.

24. The method according to any of the preceding claims 1 to 23, wherein the synthetic polar-polymer material comprises at least two layers, wherein at least a first layer is of a polar-polymer material, that comprises ≥ 0.5 wt.-%, preferably ≥ 5 wt.-%, more preferably ≥ 10 wt.-%, of polar components, such as synthetic polar polymer, synthetic polar oligomer and/or polar additive, and is colorizable, where else the second layer comprising less than 5 wt.-%, preferably < 3 wt.-%, further preferred < 2 wt.-% and in addition preferred < 0.5 wt.-% or ≥ 0 to < 0.1 wt.-% of a polar component and ≥ 90 wt.-%, preferably ≥ 95 wt.-% to ≤ 100 wt.-% of at least one non-polar component, such as non-polar polymer and/or non-polar oligomer, cannot be colorized.

25. A colored synthetic polar-polymer material, wherein the synthetic polar-polymer material, preferably the outer surface of the synthetic polar-polymer material, is colored by a method according to any of claims 1 to 24.

26. A colored synthetic polar-polymer material according to claim 25 comprising at least one synthetic polar-component layer and at least one non-polar-component layer, wherein at least one layer or outer surface of the synthetic polar-component layer is colored by a method according to any of claims 1 to 24, wherein the non-polar-component layer is not colorable by the method according to claims 1 to 24.

27. A colored synthetic polar-polymer material according to claims 25 or 26, wherein at least a layer thickness of ≥ 0.1 µm, preferably of ≥ 1 µm to ≤ 1000 µm, of the colored synthetic polar-polymer material is homogenous colored.

28. A colored synthetic polar-polymer material according to any of claims 25 to 27, wherein the concentration of the organic aromatic coloring agent in at least one colored layer of the synthetic polar-polymer material, colored by a method according to any of claims 1 to 24, wherein the colored layer has a thickness of ≥ 0.1 µm, is 0.00001 wt.-% to ≤ 5 wt.-%, based on the total weight of said colored layer.

29. Article comprising at least one colored synthetic polar-polymer material according to claims 25 to 28 colored by a method according to claims 1 to 24.

30. Article according to claim 29, wherein the article is selected from the group comprising a sheet, a foil, a container, a part, a bottle and preferably the article is selected from the group comprising computer face-plates, keyboards, bezels and cellular phones, color coded packaging and containers of all types, including ones for industrial components, residential and commercial lighting fixtures and components therefor, such as sheets, used in building and in construction, tableware, including plates, cups and eating utensils, small appliances and their components, optical and sun-wear lenses, as well as decorative films including such films that are intended for use in film insert molding.

## Patentansprüche

1. Verfahren zum reversiblen und selektiven Färben eines synthetischen polaren Polymermaterials, mit dem Schritt:
Aussetzen der Außenfläche des synthetischen polaren Polymermaterials gegenüber einer wässrigen, dispergierten Färbelösung,
wobei die wässrige, dispergierte Färbelösung aufweist:
mindestens ein organisches aromatisches Färbemittel mit einem Molekulargewicht Mw im Bereich von ≥ 250 g/mol bis ≤ 550 g/mol, wobei das organische aromatische Färbemittel kein chemisch reaktiver Farbstoff ist, und wobei das Färbemittel mindestens 2 bis 6 aromatische sechsgliedrige Ringe aufweist und mindestens ein Heteroatom aufweist, das aus N, O, S und Halogenen ausgewählt ist;
mindestens ein Dispergiermittel zum Dispergieren des organischen aromatischen Färbemittels in der wässrigen Lösung; und
optional mindestens einen Lösungsvermittler,
wobei die wässrige dispergierte Färbelösung, der das synthetische Polymermaterial ausgesetzt wird, eine Temperatur im Bereich von ≥ 30°C bis ≤ 150°C und optional einen pH-Wert im Bereich von ≥ 2,5 und < 7 aufweist, und wobei das Dispergiermittel derart ausgewählt wird, dass es vom Lösungsvermittler verschieden ist.

2. Verfahren nach Anspruch 1, wobei das synthetische polare Polymermaterial, das gefärbt wird, mindestens eine synthetische polare Komponente aufweist, wobei die synthetische polare Komponente aufweist:
mindestens ein synthetisches polares Polymer mit einem Mw ≥ 1000 g/mol; oder
mindestens eine Zusammensetzung aus einem unpolaren Polymer mit einem Mw ≥ 1000 g/mol;:
mindestens ein synthetisches polares Polymer mit einem Mw ≥ 1000 g/mol; und/oder
mindestens ein synthetisches polares Oligomer mit einem Mw ≥ 600 g/mol und < 1000 g/mol; und/oder
mindestens ein polares Additiv mit einem Mw ≥ 70 und < 600 g/mol, wobei das polare Additiv derart ausgewählt wird, dass es vom organischen aromatischen Färbemittel mit einem Molekulargewicht Mw im Bereich von ≥ 250 g/mol bis ≤ 550 g/mol verschieden ist und kein Farbstoff ist.

3. Verfahren nach Anspruch 2, wobei das synthetische polare Polymer mit einem Mw von ≥ 1000 g/mol, das synthetische polare Oligomer mit einem Mw von ≥ 600 g/mol und < 1000 g/mol und das polare Additiv mit einem Mw von ≥ 70 und < 600 g/mol jeweils mindestens ≥ 5 Gew.-% an Heteroatomen aufweisen, wobei die Gewichtsprozente basierend auf den Einzelgewichten des synthetischen polaren Polymers, des synthetischen polaren Oligomers und des polaren Additivs berechnet werden.

4. Verfahren nach Anspruch 2 oder 3, wobei das synthetische polare Polymermaterial, das gefärbt wird, mindestens ≥ 0,5 Gew.-% der synthetischen polaren Komponente, vorzugsweise ≥ 5 Gew.-% der synthetischen polaren Komponente und weiter bevorzugt ≥ 10 Gew.-% der synthetischen polaren Komponente, zusätzlich bevorzugt ≥ 15 Gew.-% der synthetischen polaren Komponente, auch bevorzugt ≥ 20 Gew.-% der synthetischen polaren Komponente, oder ≥ 30 Gew.-% und ≤ 100 Gew.-% der synthetischen polaren Komponente aufweist, wobei die Gewichtsprozente basierend auf dem Gesamtgewicht des synthetischen polaren Polymermaterials berechnet werden.

5. Verfahren nach einem der Ansprüche 1 bis 4, wobei
a) das synthetische polare Polymer eine amorphe Phase von mindestens ≥ 10 Vol.-%, vorzugsweise ≥ 30 Vol.-%, bevorzugter ≥ 50 Vol.-% und ≤ 100 Vol.% aufweist, wobei die Volumenprozente basierend auf dem Gesamtvolumen des synthetischen Polarpolymers berechnet werden; und/oder
b) das synthetische polare Oligomer eine amorphe Phase von mindestens ≥ 10 Vol.-%, vorzugsweise ≤ 30 Vol.-%, bevorzugter ≥ 50 Vol.-% und ≤ 100 Vol.-% aufweist, wobei die Volumenprozente basierend auf dem Gesamtvolumen des synthetischen polaren Oligomers berechnet werden.

6. Verfahren nach einem der Ansprüche 1 bis 5, wobei
a) das synthetische polare Polymer oberhalb der Glasübergangstemperatur Tg ein freies Volumen im Bereich von ≥ 1 Vol.-% bis 25%, vorzugsweise ≥ 2% bis ≤ 20%, bevorzugter ≥ 2,2% bis ≤ 15%, bezogen auf das Gesamtvolumen des synthetischen polaren Polymermaterials, aufweist; und/oder
b) das synthetische polare Oligomer oberhalb der Glasübergangstemperatur Tg ein freies Volumen im Bereich von ≥ 1% bis 25%, vorzugsweise ≥ 2% bis ≤ 20%, bevorzugter ≥ 2,2% bis ≤ 15%, bezogen auf das Gesamtvolumen des synthetischen polaren Oligomermaterials, aufweist.

7. Verfahren nach einem der Ansprüche 1 bis 6, wobei die Glasübergangstemperatur Tg des synthetischen polaren Polymers im Bereich von -≥ 75°C bis ≤ 160°C, vorzugsweise ≥ -50°C bis ≤ 120°C, bevorzugter ≥ 0°C bis ≤ 115°C liegt.

8. Verfahren nach einem der Ansprüche 1 bis 7, wobei
a) das synthetische polare Polymer ausgewählt ist aus der Gruppe aufweisend synthetische polare Homopolymere, synthetische polare Copolymere und/oder synthetische polare Terpolymere; und/oder
b) das synthetische polare Oligomer ausgewählt ist aus der Gruppe aufweisend synthetische polare Homo-Oligomere, synthetische polare Cooligomere und/oder synthetische polare Teroligomere.

9. Verfahren nach einem der vorhergehenden Ansprüche 1 bis 8, wobei das polare Additiv mit einem Mw von ≥ 70 und < 600 g/mol ausgewählt ist aus der Gruppe aufweisend aliphatische Säuren CH₃-[CH₂]ₙ-COOH-Säuren (n ≥ 3), Aminosäuren, Carbonsäureamiden, Hydroxylsäuren, Fettsäuren, aliphatische oder aliphatische/aromatische Aldehyde und Ketone, Ester, Pentaerythritol, Pentaerythritolester, vorzugsweise Carbonsäureester, Benzoesäureester mit Benzylbenzoat oder Phenylbenzoat, Phenylether, Alkohole und mehrwertige Alkohole, vorzugsweise Glycerin, Amine, wobei das polare Additiv derart ausgewählt ist, dass es von dem organischen aromatischen Färbemittel mit einem Molekulargewicht Mw im Bereich von ≥ 250 g/mol bis ≤ 550 g/mol verschieden ist, und wobei vorzugsweise das polare Additiv mit einem Mw von ≥ 100 und < 600 g/mol ein Heteroatom enthält, das aus N, O, S und/oder Halogen ausgewählt ist.

10. Verfahren nach einem der vorhergehenden Ansprüche 2 bis 9, wobei das unpolare Polymer ausgewählt ist aus der Gruppe Polyalkylenpolymere, Polyalkylencopolymere, Polyalkylenblockcopolymere; das unpolare Polymer vorzugsweise ausgewählt ist aus polymeren aliphatischen oder aromatischen Kohlenwasserstoffen, vorzugsweise Polyalkylenpolymeren, Polyalkylen-Co- und Terpolymeren mit statistischer oder Blockstruktur; und noch bevorzugter aus Polyethylen (PE), Polypropylen (PP), Polybuten (PB), Polystyrol, Polyisobutylen, Polybutadien, Polyisopren.

11. Verfahren nach einem der vorhergehenden Ansprüche 1 bis 10, wobei das organische aromatische Färbemittel ein Molekulargewicht Mw im Bereich von ≥ 250 g/mol bis ≤ 550 g/mol aufweist, wobei vorzugsweise das organische aromatische Färbemittel ein Molekulargewicht Mw im Bereich von ≥ 270 g/mol bis ≤ 450 g/mol aufweist, und wobei noch bevorzugter das organische aromatische Färbemittel ein Molekulargewicht Mw im Bereich von ≥ 285 g/mol bis ≤ 400 g/mol aufweist.

12. Verfahren nach einem der vorhergehenden Ansprüche 1 bis 11, wobei das organische aromatische Färbemittel eine Löslichkeit in Wasser bei 23°C von ≤ 0,1 g/l und > 0 g/l, vorzugsweise ≤ 0,01 g/l und > 0 g/l, bevorzugter ≤ 0,001 g/l und > 0 g/l aufweist.

13. Verfahren nach einem der vorhergehenden Ansprüche 1 bis 12, wobei das organische aromatische Färbemittel mindestens 3 bis 5 aromatische sechsgliedrige Ringe und mindestens 1 bis 4 fünfgliedrige Ringe aufweist oder mindestens 2 bis 6 aromatische sechsgliedrige Ringe aufweist, und/oder wobei das organische aromatische Färbemittel mindestens ein Heteroatom aufweist, das aus N, O, S und Halogenen ausgewählt ist.

14. Verfahren nach einem der vorhergehenden Ansprüche 1 bis 13, wobei das Dispergiermittel ausgewählt ist aus der Gruppe aufweisend mindestens eine Komponente unter:
einem anionischen Tensid, das vorzugsweise ausgewählt ist aus Polyphosphaten, Polyacrylaten, aromatischen Sulfonaten, Estern mit Ethoxylatgruppen, Estern mit Sulfonatgruppen, Polymeren auf Fettsäurebasis mit einer anionischen Gruppe, Salzen von Polycarbonsäuren, Ethoxylaten, Thioharnstoffdioxid;
einem kationischen Tensid, das vorzugsweise ausgewählt ist aus quaternären Ammoniumverbindungen, Fettsäurepolymeren mit einer kationischen Gruppe pro Molekül;
einem nicht-ionischen Tensid, das vorzugsweise ausgewählt ist aus aromatischen Estern und Kohlenwasserstoffen, aromatischen und nicht-aromatischen Carbonsäureestern, Ethylacrylat, Fettsäureestern, ethoxylierter Fettsäure, Polymeren auf Fettsäurebasis mit einer nicht-ionischen Gruppe pro Molekül, Acrylat-Copolymeren, Acrylat/Styrol-Copolymeren, Fettsäurederivaten, Polyalkoxylat;
Polyurethan(PUR)-Polymeren und/oder Polyacrylat-Polymeren, vorzugsweise linearen oder verzweigten Polyurethan(PUR)-Polymeren und/oder Polyacrylat-Polymeren, wobei das Polyurethan(PUR)-Polymer und/oder Polyacrylat-Polymer bevorzugt ein MW von 5000 bis 30000 g/mol aufweist.

15. Verfahren nach einem der vorhergehenden Ansprüche 1 bis 14, wobei der Lösungsvermittler bei 23°C löslich ist und ausgewählt ist aus der Gruppe aufweisend einen C₁- bis C₆-Alkohol, eine organische C₂- bis C₂₀-Säure, ein C₃- bis C₆-Keton, ein C₃- bis Cs-Aldehyd, ein C₁- bis C₆-Alkyl, ein C₃- bis C₆-Ester, ein Alkylenglykolalkylether, ein Glykolalkylether, vorzugsweise Glykol und Glykololigomere, Ethanol, Aceton, Ameisen- oder Essigsäure, Dimethylformamid oder Dimethylsulfoxid.

16. Verfahren nach einem der vorhergehenden Ansprüche 1 bis 15, wobei die wässrige dispergierte Färbelösung zusätzlich ein Trägermittel enthält, wobei das Trägermittel vorzugsweise ausgewählt ist aus der Gruppe aufweisend aromatische Ester wie Phthalsäureester, Polyphenylether, Phenole, aromatische Alkohole, aromatische Ketone, Arylhalogenide, wie halogeniertes Benzol, halogeniertes Toluol; N-Alkylphthalimid, Methylnaphthalin, Diphenyl, Diphenylether, Naphtholether und Oxybiphenyl.

17. Verfahren nach einem der vorhergehenden Ansprüche 1 bis 16, wobei der Schritt zum Aussetzen der Außenfläche des synthetischen polaren Polymermaterials gegenüber einer wässrigen dispergierten Färbelösung aufweist:
Eintauchen der Außenfläche des synthetischen polaren Polymermaterials in die wässrige dispergierte Färbelösung; und/oder
Fließbeschichten der Außenfläche des synthetischen polaren Polymermaterials mit der wässrigen dispergierten Färbelösung.

18. Verfahren nach einem der vorhergehenden Ansprüche 1 bis 17, wobei der Schritt zum Aussetzen der Außenfläche des synthetischen polaren Polymermaterials gegenüber einer wässrigen dispergierten Färbelösung aufweist:
Rühren der wässrigen dispergierten Färbelösung, während die Außenfläche des synthetischen polaren Polymermaterials der wässrigen dispergierten Färbelösung ausgesetzt wird; und/oder
Anwenden von Ultraschall auf die wässrige dispergierte Färbelösung, während die Außenfläche des synthetischen polaren Polymermaterials der wässrigen dispergierten Färbelösung ausgesetzt wird.

19. Verfahren nach einem der vorhergehenden Ansprüche 1 bis 18, wobei das synthetische polare Polymermaterial in einem Formgebungsprozess, einem Formpressprozess, einem Extrusionsprozess, einem Thermoformprozess, einem Blasprozess und/oder einem 3D-Druckprozess ausgebildet und anschließend der wässrigen dispergierten Färbelösung ausgesetzt wird, wobei vorzugsweise das synthetische polare Polymermaterial ohne Kühlung unter Ausnutzung der Restwärme aus dem Formgebungsprozess, dem Formpressprozess, dem Extrusionsprozess, dem Thermoformprozess, dem Blasprozess und/oder dem 3D-Druckprozess direkt der wässrigen dispergierten Färbelösung ausgesetzt wird.

20. Verfahren nach einem der vorhergehenden Ansprüche 1 bis 19, wobei das synthetische polare Polymermaterial, vorzugsweise mindestens eine Außenfläche des synthetischen polaren Polymermaterials, der wässrigen dispergierten Färbelösung für ≥ 1 Sekunde bis ≤ 60 Minuten, vorzugsweise ≥ 3 Sekunden bis ≤ 30 Minuten, auch bevorzugt ≥ 5 Sekunden bis ≤ 10 Minuten, und ebenfalls bevorzugt ≥ 10 Sekunden bis ≤ 1 Minute oder ≥ 15 Sekunden bis ≤ 30 Sekunden ausgesetzt wird.

21. Verfahren nach einem der vorhergehenden Ansprüche 1 bis 20, wobei die wässrige dispergierte Färbelösung aufweist:
≥ 0,1 Gew.-% bis ≤ 15 Gew.-% mindestens eines organischen aromatischen Färbemittels mit einem Molekulargewicht Mw im Bereich von ≥ 250 g/mol bis ≤ 550 g/mol;
≥ 0,01 Gew.-% bis ≤ 10 Gew.-% eines Dispergiermittels zum Dispergieren des organischen aromatischen Färbemittels in der wässrigen Lösung;
≥ 0 Gew.-% bis ≤ 50 Gew.-% mindestens eines Lösungsvermittlers; und
einen Rest an Wasser, das zugesetzt wird, bis 100 Gew.-% erreicht sind.

22. Verfahren nach einem der vorhergehenden Ansprüche 1 bis 21, wobei die wässrige dispergierte Färbelösung aufweist:
≥ 0,1 Gew.-% bis ≤ 15 Gew.-% mindestens eines organischen aromatischen Färbemittels mit einem Molekulargewicht Mw im Bereich von ≥ 250 g/mol bis ≤ 550 g/mol;
≥ 0,01 Gew.-% bis ≤ 10 Gew.-% eines Dispergiermittels zum Dispergieren des organischen aromatischen Färbemittels in der wässrigen Lösung;
≥ 0 Gew.-% bis ≤ 50 Gew.-% mindestens eines Lösungsvermittlers;
≥ 0,05 Gew.-% bis ≤ 5 Gew.-% mindestens eines Trägermittels; und
einen Rest an Wasser, das zugesetzt wird, bis 100 Gew.-% erreicht sind.

23. Verfahren nach einem der vorhergehenden Ansprüche 1 bis 22, wobei die wässrige dispergierte Färbelösung einen pH-Wert im Bereich ≥ 3,2 und ≤ 6,5, vorzugsweise einen pH-Wert im Bereich ≥ 3,4 und ≤ 6, weiter bevorzugt einen pH-Wert im Bereich ≥ 3,5 und ≤ 5,5 und ebenfalls bevorzugt einen pH-Wert im Bereich ≥ 4 und ≤ 5 aufweist.

24. Verfahren nach einem der vorhergehenden Ansprüche 1 bis 23, wobei das synthetische polare Polymermaterial mindestens zwei Schichten aufweist, wobei mindestens eine erste Schicht aus einem polaren Polymermaterial besteht, das ≥ 0,5 Gew.-%, vorzugsweise ≥ 5 Gew.-%, bevorzugter ≥ 10 Gew.-%, an polaren Komponenten wie synthetisches polares Polymer, synthetisches polares Oligomer und/oder polares Additiv, aufweist und färbbar ist, wobei die zweite Schicht, die weniger als 5 Gew.-%, vorzugsweise < 3 Gew.-%, bevorzugter < 2 Gew.-% und auch bevorzugt < 0,5 Gew.-% oder ≥ 0 bis < 0,1 Gew.-% einer polaren Komponente und ≥ 90 Gew.-%, vorzugsweise 95 Gew.-% bis ≤ 100 Gew.-% mindestens einer unpolaren Komponente wie unpolares Polymer und/oder unpolares Oligomer aufweist, nicht färbbar ist.

25. Gefärbtes synthetisches polares Polymermaterial, wobei das synthetische polare Polymermaterial, vorzugsweise die Außenfläche des synthetischen polaren Polymermaterials, durch ein Verfahren nach einem der Ansprüche 1 bis 24 gefärbt ist.

26. Gefärbtes synthetisches polares Polymermaterial nach Anspruch 25, mit mindestens einer Schicht aus einer synthetischen polaren Komponente und mindestens einer Schicht aus einer unpolaren Komponente, wobei mindestens eine Schicht oder die Außenfläche der Schicht aus einer synthetischen polaren Komponente durch ein Verfahren nach einem der Ansprüche 1 bis 24 gefärbt ist, wobei die Schicht aus einer unpolaren Komponente durch das Verfahren nach einem der Ansprüche 1 bis 24 nicht färbbar ist.

27. Gefärbtes synthetisches polares Polymermaterial nach Anspruch 25 oder 26, wobei mindestens eine Schichtdicke von ≥ 0,1 µm, vorzugsweise von ≥ 1 µm bis ≤ 1000 µm, des gefärbten synthetischen polaren Polymermaterials homogen gefärbt ist.

28. Gefärbtes synthetisches polares Polymermaterial nach einem der Ansprüche 25 bis 27, wobei die Konzentration des organischen aromatischen Färbemittels in mindestens einer gefärbten Schicht des synthetischen polaren Polymermaterials, das durch ein Verfahren nach einem der Ansprüche 1 bis 24 gefärbt ist, wobei die gefärbte Schicht eine Dicke von ≥ 0,1 µm hat, 0,00001 Gew.-% bis ≤ 5 Gew.-%, bezogen auf das Gesamtgewicht der gefärbten Schicht, beträgt.

29. Artikel, mit mindestens einem gefärbten synthetischen polaren Polymermaterial nach einem der Ansprüche 25 bis 28, das durch ein Verfahren nach einem der Ansprüche 1 bis 24 gefärbt ist.

30. Artikel nach Anspruch 29, wobei der Artikel ausgewählt ist aus der Gruppe aufweisend eine Platte, eine Folie, einen Behälter, ein Teil, eine Flasche, und wobei der Artikel vorzugsweise ausgewählt ist aus der Gruppe aufweisend Computerfrontplatten, Tastaturen, Blenden und Mobiltelefone, farbcodierte Verpackungen und Behälter aller Art, einschließlich solche für industrielle Komponenten, Beleuchtungskörperbefestigungen für Wohn- und Geschäftszwecke und Komponenten dafür, wie z.B. Platten, die in Gebäuden und bei der Konstruktion verwendet werden, Geschirr, einschließlich Teller, Tassen und Besteck, Kleingeräte und ihre Komponenten, optische Linsen und Sonnenschutzlinsen sowie Dekorationsfolien, einschließlich solcher Folien, die für die Verwendung beim Film-Insert-Molding vorgesehen sind.

## Revendications

1. Procédé de coloration réversible et sélective d'un matériau de polymère polaire synthétique comprenant l'étape :
d'exposition de la surface externe du matériau de polymère polaire synthétique à une solution colorante aqueuse dispersée, dans lequel
la solution colorante aqueuse dispersée comprend :
- au moins un agent colorant aromatique organique ayant un poids moléculaire Mw dans la plage de ≥ 250 g/mol à ≤ 550 g/mol, et dans lequel l'agent colorant aromatique organique n'est pas un colorant chimique réactif, et dans lequel l'agent colorant comprend au moins 2 à 6 cycles aromatiques à six chaînons et comprend au moins un hétéroatome choisi parmi N, O, S, halogènes,
- au moins un agent dispersant pour disperser l'agent colorant aromatique organique dans la solution aqueuse, et
- optionnellement au moins un solubilisant,
dans lequel la solution colorante dispersée aqueuse exposant le matériau de polymère synthétique a une température dans la plage ≥ 30 °C à ≤ 150 °C et optionnellement un pH dans la plage ≥ 2,5 et < 7, et dans lequel l'agent dispersant est sélectionné différent du solubilisant.

2. Procédé selon la revendication 1, dans lequel le matériau de polymère polaire synthétique qui est coloré comprend au moins un composant polaire synthétique, dans lequel le composant polaire synthétique comprend
- au moins un polymère polaire synthétique ayant un Mw ≥ 1000 g/mol ; ou
- au moins une composition d'un polymère non polaire ayant un Mw ≥ 1000 g/mol contenant
- au moins un polymère polaire synthétique ayant un Mw ≥ 1000 g/mol, et/ou
- au moins un oligomère polaire synthétique ayant un Mw ≥ 600 g/mol et < 1000 g/mol, et/ou
- au moins un additif polaire ayant un Mw ≥ 70 et < 600 g/mol, l'additif polaire étant choisi différent de l'agent colorant aromatique organique ayant un poids moléculaire Mw dans la plage ≥ 250 g/mol à ≤ 550 g/mol et n'étant pas un colorant.

3. Procédé selon la revendication 2, dans lequel chacun du polymère polaire synthétique ayant un Mw ≥ 1000 g/mol, de l'oligomère polaire synthétique ayant un Mw ≥ 600 g/mol et < 1000 g/mol, et de l'additif polaire ayant un Mw ≥ 70 et < 600 g/mol comprend au moins ≥ 5 % en poids d'hétéroatomes, le % en poids étant calculé sur la base des poids individuels du polymère polaire synthétique, de l'oligomère polaire synthétique, et de l'additif polaire.

4. Procédé selon la revendication 2 ou 3, dans lequel le matériau de polymère polaire synthétique qui est coloré comprend au moins ≥ 0,5 % en poids du composant polaire synthétique, de préférence ≥ 5 % en poids du composant polaire synthétique, et encore de préférence ≥ 10 % en poids du composant polaire synthétique, en outre de préférence ≥ 15 % en poids du composant polaire synthétique, également de préférence ≥ 20 % en poids du composant polaire synthétique, ou ≥ 30 % en poids et ≤ 100 % en poids du composant polaire synthétique, le % en poids étant calculé sur la base du poids total du matériau de polymère polaire synthétique.

5. Procédé selon les revendications 1 à 4, dans lequel
a) le polymère polaire synthétique comprend une phase amorphe d'au moins ≥ 10 % en volume, de préférence ≥ 30 % en volume, de façon plus préférée ≥ 50 % en volume et ≤ 100 % en volume, dans lequel le % en volume est calculé sur le volume total du polymère polaire synthétique ; et/ou
b) l'oligomère polaire synthétique comprend une phase amorphe d'au moins ≥ 10 % en volume, de préférence ≥ 30 % en volume, de façon plus préférée ≥ 50 % en volume et ≤ 100 % en volume, dans lequel le % en volume est calculé sur le volume total de l'oligomère polaire synthétique.

6. Procédé selon l'une quelconque des revendications 1 à 5, dans lequel
a) le polymère polaire synthétique présente, au-dessus de la température de transition vitreuse Tg, un volume libre dans la plage ≥ 1 % en volume à 25 %, de préférence ≥ 2 % à ≤ 20 %, de préférence encore ≥ 2,2 % à ≤ 15 %, sur la base du volume total du matériau de polymère polaire synthétique ; et/ou
b) l'oligomère polaire synthétique présente, au-dessus de la température de transition vitreuse Tg, un volume libre compris dans la plage ≥ 1 % à 25 %, de préférence ≥ 2 % à ≤ 20 %, de préférence encore ≥ 2,2 % à ≤ 15 %, sur la base du volume total du matériau oligomère polaire synthétique.

7. Procédé selon l'une quelconque des revendications 1 à 6, dans lequel la température de transition vitreuse Tg du polymère polaire synthétique est dans la plage ≥ -75°C à ≤ 160°C, de préférence ≥ -50°C à ≤ 120°C, de préférence encore ≥ 0°C à ≤ 115°C.

8. Procédé selon l'une quelconque des revendications 1 à 7, dans lequel
a) le polymère polaire synthétique est choisi dans le groupe comprenant les homopolymères polaires synthétiques, les copolymères polaires synthétiques et/ou les terpolymères polaires synthétiques ; et/ou
b) l'oligomère polaire synthétique est choisi dans le groupe comprenant les homo-oligomères polaires synthétiques, les cooligomères polaires synthétiques et/ou les téroligomères polaires synthétiques.

9. Procédé selon l'une quelconque des revendications précédentes 1 à 8, dans lequel l'additif polaire ayant un Mw ≥ 70 et < 600 g/mol est choisi dans le groupe comprenant les acides aliphatiques CH₃-[CH₂]ₙ-COOH (n ≥ 3), acides aminés, amide d'acide carboxylique, acides hydroxylés, acides gras, aldéhydes et cétones aliphatiques ou aliphatiques/aromatiques, esters, pentaérythritol, ester de pentaérythritol, de préférence ester d'acide carboxylique, esters d'acide benzoïque contenant du benzylbenzoate ou du phénylbenzoate, phényléther, alcools et alcools polyvalents, de préférence la glycérine, amines, l'additif polaire étant choisi différent de l'agent colorant aromatique organique ayant un poids moléculaire Mw dans la plage ≥ 250 g/mol à ≤ 550 g/mol ; et de préférence, l'additif polaire ayant un Mw ≥ 100 et < 600 g/mol contient un hétéroatome choisi parmi N, O, S et/ou halogène.

10. Procédé selon l'une quelconque des revendications précédentes 2 à 9, dans lequel le polymère non polaire est choisi dans le groupe des polymères de polyalkylène, des copolymères de polyalkylène, des copolymères séquencés de polyalkylène ; le polymère non polaire est de préférence choisi parmi les hydrocarbures polymères aliphatiques ou aromatiques, de préférence les polymères de polyalkylène, des co- et terpolymères de polyalkylène à structure statistique ou séquencée ; et plus préférablement parmi le polyéthylène (PE), le polypropylène (PP), le polybutène (PB), le polystyrène, le polyisobutylène, le polybutadiène, le polyisoprène.

11. Procédé selon l'une quelconque des revendications précédentes 1 à 10, dans lequel l'agent colorant aromatique organique a un poids moléculaire Mw dans la plage ≥ 250 g/mol à ≤ 550 g/mol, de préférence l'agent colorant aromatique organique a un poids moléculaire poids Mw dans la plage ≥ 270 g/mol à ≤ 450 g/mol, et plus préférablement l'agent colorant aromatique organique a un poids moléculaire Mw dans la plage ≥ 285 g/mol à ≤ 400 g/mol.

12. Procédé selon l'une quelconque des revendications précédentes 1 à 11, dans lequel l'agent colorant aromatique organique a une solubilité dans l'eau à 23 °C ≤ 0,1 g/l et > 0 g/l, de préférence ≤ 0,01 g/l et > 0 g/l, plus préférablement ≤ 0,001 g/l et > 0 g/l.

13. Procédé selon l'une quelconque des revendications précédentes 1 à 12, dans lequel l'agent colorant aromatique organique comprend au moins 3 à 5 cycles aromatiques à six membres et au moins 1 à 4 cycles à cinq membres, ou ayant au moins 2 à 6 cycles aromatiques à six membres ; et/ou dans lequel l'agent colorant aromatique organique comprend au moins un hétéroatome choisi parmi N, O, S, halogènes.

14. Procédé selon l'une quelconque des revendications précédentes 1 à 13, dans lequel l'agent dispersant est choisi dans le groupe comprenant au moins un :
- tensioactif anionique, de préférence choisi parmi les polyphosphates, les polyacrylates, les sulfonates aromatiques, les esters à groupements éthoxylates, les esters à groupements sulfonates, les polymères à base d'acides gras à groupement anionique, les sels d'acides polycarboxyliques, les éthoxylates, le dioxyde de thiourée ;
- tensioactif cationique, de préférence choisi parmi les composés d'ammonium quaternaire, les polymères d'acide gras avec un groupement cationique par molécule ;
- tensioactif non ionique, de préférence choisi parmi les esters et hydrocarbures aromatiques, les esters d'acides carboxyliques aromatiques et non aromatiques, l'acrylate d'éthyle, les esters d'acides gras, l'acide gras éthoxylé, les polymères à base d'acide gras avec un groupement non ionique par molécule, copolymères d'acrylate, copolymères d'acrylate/styrène, dérivés d'acides gras, polyalcoxylate ;
- polymères de polyuréthane (PUR) et/ou polymères de polyacrylate, de préférence polymères de polyuréthane (PUR) linéaires ou ramifiés et/ou les polymères de polyacrylate, plus préférablement, le polymère de polyuréthane (PUR) et/ou le polymère de polyacrylate ayant un poids moléculaire de 5 000 à 30 000 g/mol.

15. Procédé selon l'une quelconque des revendications précédentes 1 à 14, dans lequel le solubilisant est soluble à 23 °C et choisi dans le groupe comprenant un alcool en C₁ à C₆, un acide organique en C₂ à C₂₀, une cétone en C₃ à C₆, un aldéhyde en C₃ à C₅, un alkyle en C₁ à C₆ alkyle, un ester C₃ à C₆, un alkylène glycol alkyléther, glycol alkyléther ; de préférence un glycol et des oligomères de glycol, l'éthanol, l'acétone, l'acide formique ou acétique, le diméthylformamide ou le diméthylsulfoxyde.

16. Procédé selon l'une quelconque des revendications précédentes 1 à 15, dans lequel la solution colorante aqueuse dispersée comprend en outre un agent porteur, dans lequel l'agent porteur est de préférence choisi dans le groupe comprenant les esters aromatiques tels que les esters d'acide phtalique, le polyphényléther, les phénoles, les alcools aromatiques, les cétones aromatiques, les halogénures d'aryle, tels que un benzène halogéné, un toluène halogéné ; un N-alkylphtalimide, une méthylnaphtaline, un diphényle, un diphényléther, un naphtoléther et un oxybiphényle.

17. Procédé selon l'une quelconque des revendications précédentes 1 à 16, dans lequel l'étape d'exposition de la surface externe du matériau de polymère polaire synthétique à une solution colorante aqueuse dispersée comprend :
- le trempage de la surface externe du matériau de polymère polaire synthétique dans la solution colorante aqueuse dispersée ; et/ou
- le revêtement fluide de la surface externe du matériau de polymère polaire synthétique avec la solution colorante aqueuse dispersée.

18. Procédé selon l'une quelconque des revendications précédentes 1 à 17, dans lequel l'étape d'exposition de la surface externe du matériau de polymère polaire synthétique à une solution colorante aqueuse dispersée comprend :
- l'agitation de la solution colorante aqueuse dispersée pendant que la surface externe du matériau de polymère polaire synthétique est exposée à la solution colorante aqueuse dispersée, et/ou
- l'application des ultrasons à la solution colorante dispersée aqueuse pendant que la surface externe du matériau de polymère polaire synthétique est exposée à la solution colorante dispersée aqueuse.

19. Procédé selon l'une quelconque des revendications précédentes 1 à 18, dans lequel le matériau de polymère polaire synthétique est formé lors d'un procédé de moulage, un procédé de moulage par compression, un procédé d'extrusion, un procédé de thermoformage, un procédé de soufflage et/ou un procédé d'impression 3D, puis exposé à la solution colorante aqueuse dispersée ; de préférence, le matériau de polymère polaire synthétique est directement exposé, sans refroidissement, à la solution colorante aqueuse dispersée avec la chaleur restante provenant du procédé de moulage, du procédé de moulage par compression, du procédé d'extrusion, du procédé de thermoformage, du procédé de soufflage et/ou du procédé d'impression 3D.

20. Procédé selon l'une quelconque des revendications précédentes 1 à 19, dans lequel le matériau de polymère polaire synthétique, de préférence au moins une surface externe du matériau de polymère polaire synthétique, est exposé à la solution colorante aqueuse dispersée pendant ≥ 1 seconde à ≤ 60 minutes, de préférence ≥ 3 secondes à ≤ 30 minutes, en outre de préférence ≥ 5 secondes à ≤ 10 minutes, et également de préférence ≥ 10 secondes à ≤ 1 minute, ou ≥ 15 secondes à ≤ 30 secondes.

21. Procédé selon l'une quelconque des revendications précédentes 1 à 20, dans lequel la solution colorante aqueuse dispersée comprend :
- ≥ 0,1 % en poids à ≤ 15 % en poids d'au moins un agent colorant aromatique organique ayant un poids moléculaire Mw dans la plage ≥ 250 g/mol à ≤ 550 g/mol ;
- ≥ 0,01 % en poids à ≤ 10 % en poids d'un agent dispersant pour disperser le colorant aromatique organique dans la solution aqueuse,
- ≥ 0 % en poids à ≤ 50 % en poids d'au moins un solubilisant, et
- eau ajoutée à 100 % en poids.

22. Procédé selon l'une quelconque des revendications précédentes 1 à 21, dans lequel la solution colorante aqueuse dispersée comprend :
- ≥ 0,1 % en poids à ≤ 15 % en poids d'au moins un agent colorant aromatique organique ayant un poids moléculaire Mw dans la plage ≥ 250 g/mol à ≤ 550 g/mol ;
- ≥ 0,01 % en poids à ≤ 10 % en poids d'un agent dispersant pour disperser l'agent colorant aromatique organique dans la solution aqueuse,
- ≥ 0 % en poids à ≤ 50 % en poids d'au moins un solubilisant,
- ≥ 0,05 % en poids à ≤ 5 % en poids d'au moins un agent porteur, et
- eau ajoutée à 100 % en poids.

23. Procédé selon l'une quelconque des revendications précédentes 1 à 22, dans lequel la solution colorante aqueuse dispersée a un pH dans la plage ≥ 3,2 et ≤ 6,5, de préférence un pH dans la plage ≥ 3,4 et ≤ 6 ; en outre de préférence un pH dans la plage ≥ 3,5 et ≤ 5,5 et également de préférence un pH dans la plage ≥ 4 et ≤ 5.

24. Procédé selon l'une quelconque des revendications précédentes 1 à 23, dans lequel le matériau de polymère polaire synthétique comprend au moins deux couches, dans lequel au moins une première couche est constituée d'un matériau de polymère polaire, qui comprend ≥ 0,5 % en poids, de préférence ≥ 5 % en poids, plus préférablement ≥ 10 % en poids, de composants polaires, tels qu'un polymère polaire synthétique, un oligomère polaire synthétique et/ou un additif polaire, et peut être colorisée, tandis que la seconde couche comprenant moins de 5 % en poids, de préférence < 3 % en poids, de préférence encore < 2 % en poids et en outre de préférence < 0,5 % en poids ou ≥ 0 à < 0,1 % en poids d'un composant polaire et ≥ 90 % en poids, de préférence ≥ 95 % en poids à ≤ 100 % en poids d'au moins un composant non polaire, tel qu'un polymère non polaire et/ou un oligomère non polaire, ne peut pas être colorisée.

25. Matériau de polymère polaire synthétique coloré, dans lequel le matériau de polymère polaire synthétique, de préférence la surface externe du matériau de polymère polaire synthétique, est colorisé par un procédé selon l'une quelconque des revendications 1 à 24.

26. Matériau de polymère polaire synthétique coloré selon la revendication 25, comprenant au moins une couche de composant polaire synthétique et au moins une couche de composant non polaire, dans lequel au moins une couche ou surface externe de la couche de composant polaire synthétique est colorisée par un procédé selon l'une quelconque des revendications 1 à 24, dans lequel la couche de composant non polaire ne peut pas être colorisée par le procédé selon les revendications 1 à 24.

27. Matériau de polymère polaire synthétique coloré selon les revendications 25 ou 26, dans lequel au moins une épaisseur de couche ≥ 0,1 µm, de préférence ≥ 1 µm à ≤ 1 000 µm, du matériau de polymère polaire synthétique colorisé est colorisée de manière homogène.

28. Matériau de polymère polaire synthétique coloré selon l'une quelconque des revendications 25 à 27, dans lequel la concentration de l'agent colorant aromatique organique dans au moins une couche colorisée du matériau de polymère polaire synthétique, colorisée par un procédé selon l'une quelconque des revendications 1 à 24, dans laquelle la couche colorisée a une épaisseur ≥ 0,1 µm, est de 0,00001 % en poids à ≤ 5 % en poids, sur la base du poids total de ladite couche colorisée.

29. Article comprenant au moins un matériau de polymère polaire synthétique coloré selon les revendications 25 à 28 colorisé par un procédé selon les revendications 1 à 24.

30. Article selon la revendication 29, dans lequel l'article est choisi dans le groupe comprenant une feuille, un film, un récipient, une pièce, une bouteille, et de préférence l'article est choisi dans le groupe comprenant des faces avant d'ordinateur, claviers, cadrans et téléphones portables, emballages et contenants à code couleur de tous types, y compris ceux pour composants industriels, appareils d'éclairage résidentiels et commerciaux et leurs composants, tels que feuilles, utilisés dans le bâtiment et la construction, vaisselle, y compris assiettes, tasses et ustensiles de cuisine, petits appareils électroménagers et leurs composants, lentilles optiques et solaires, ainsi que films décoratifs, y compris ces films destinés à être utilisés dans le moulage d'inserts de film.
